# EUROPÄISCHE PATENTSCHRIFT

(11) **EP 2 256 456 B1**
(45) Veröffentlichungstag und Bekanntmachung des Hinweises auf die Patenterteilung: **23.12.2015**
(21) Anmeldenummer: 10005157.2
(22) Anmeldetag: 18.05.2010
(51) Int. Cl.: G01C 7/06, E21D 9/00

(54) **Messung unterirdischer Bauwerke insbesondere beim unterirdischen Vortrieb**
Measurement of underground structures in particular for underground tunnelling
Mesure de constructions souterraines, notamment lors de l'avancée souterraine

(30) Priorität: 09.01.2010 DE 102010004231; 09.01.2010 DE 102010004264; 26.05.2009 DE 102009022750
(43) Veröffentlichungstag der Anmeldung: 01.12.2010
(73) Patentinhaber: Emschergenossenschaft, 45128 Essen (DE)
(72) Erfinder: Kemper-Böninghausen, Rolf, 45359 Essen (DE)
(74) Vertreter: Kaewert, Klaus

(56) Entgegenhaltungen:
- EP-A2- 0 730 084
- DE-C1- 4 017 833
- JP-A- H08 189 827
- JP-A- H08 233 575

## Beschreibung

Die Erfindung betrifft die Messung unterirdischer Bauwerke, insbesondere beim unterirdischen Vortrieb. Beim unterirdischen Vortrieb ist die Vermessung unerlässlich. Aber auch nach Fertigstellung eines unterirdischen Bauwerkes sind Vermessungen notwendig, um zum Beispiel eine Bauwerkssetzung zu ermitteln.
Unterirdischer Vortrieb kommt vor im Bergbau, im Kanalbau, im Tunnelvortrieb, im Rohrvortrieb, bei Unterführungen.
Für den unterirdischen Vortrieb stehen verschiedene Verfahren zur Verfügung.
Schon der Bergbau kennt verschiedene Vortriebsverfahren.
Dazu gehören zum Beispiel der Sprengvortrieb, der Schildvortrieb, der Messervortrieb und der Pressvortrieb. Bei jedem der Verfahren muss der Vortrieb eingemessen werden.
Dabei wird das Bauwerk vorzugsweise in jeder Richtung eingemessen/vermessen.
Im unterirdischen Kanalbau kommen zum Teil besondere Verfahren zum Einsatz, desgleichen für den Rohrvortrieb.

In einer Variante wird mittels einer Rohrpresse von einer Startgrube ausgehend ein Schneidrohr/Schneidschuh durch den Untergrund getrieben. Nach jedem Pressenhub wird die Presse in die Ausgangsstellung zurückgefahren, so dass ein zweites Rohrstück in der Startgrube vor der Presse positioniert werden kann und eine erneute Pressenbetätigung den Vortrieb des Rohrstückes bewirkt und das zweite Rohrstück das Schneidrohr voranschiebt.
Der Vorgang wiederholt sich mit jedem dritten Rohrstück wie auch mit jedem weiteren Rohrstück.

In einer anderen Variante wird vor dem sich bildenden Kanal Erdreich abgebaut und werden in dem entstehenden Hohlraum Tübbinge montiert.
In beiden Varianten des Kanalbaus ist eine Einmessung/Vermessung des Vortriebs und der Rohre erforderlich. Beim Nachmessen wird die Abweichung des Kanalverlaufes von der durch die Planung vorbestimmten Lage und Höhe gemessen bzw. wird die Abweichung des Kanals von einem Dokumentationsstand des Kanals gemessen, dessen Beibehaltung gewünscht ist.

Beim Einmessen wird die gewünschte Planungslage des Kanals auf die Vortriebswerkzeuge für den Kanalbau übertragen.
Der Tunnelvortrieb ist dem Vortrieb im Bergbau am ähnlichsten, auch wenn die Tunnelquerschnitte anders sind als die Streckenquerschnitte im Bergbau.
Im Tunnelvortrieb kommen die gleichen Verfahren zur Anwendung wie im Bergbau. Dementsprechend kommt auch hier eine Einmessung und Nachmessung wie beim Bergbau vor.
Der Rohrvortrieb ist in einigen Bereichen, insbesondere bei grösseren Abmessungen dem Tunnelvortrieb sehr ähnlich. Dementsprechend kommen beim Rohrvortrieb auch Vortriebsverfahren wie beim Tunnelvortrieb oder auch wie beim Kanalbau vor.
Unterführungen können je nach Abmessungen tunnelähnlich sein.
Dementsprechend kommen dann auch Messungen wie beim Tunnelbau vor. Im Übrigen machen Erdbewegungen immer wieder eine Nachvermessung an unterirdischen Bauwerken notwendig.
Beim Vermessen des unterirdischen Bauwerks, insbesondere beim unterirdischen Vortrieb, gibt es verschiedene Verfahren.

Herkömmlich findet eine geodätische Vermessung mit Tachymeter statt, die von Hand auf dem Bauwerksboden bzw. Kanalboden aufgestellt werden. Dabei kommen Stative zur Anwendung, die mit einer Höhenverstellung versehen sind.
Das Tachymeter ist ein Gerät, mit dem man Horizontalrichtungen, Vertikalwinkel und auch Schrägstrecken ermitteln kann. Mit ihm lassen sich Vermessungen schnell und mit grosser Genauigkeit durchführen.

Die elektronischen Tachymeter messen die Richtungen nach dem Zielvorgang selbsttätig. Zugleich werden elektronische Distanzmessungen durchgeführt. Dabei wird entweder nur die Laufzeit oder bei präziseren Tachymetern Laufzeit und Phasenverschiebung eines ausgesandten und im Zielpunkt reflektierten Lichtstrahls gemessen. Üblicherweise liegt das Licht der Trägerwelle im infraroten Bereich oder nahe dem infraroten Bereich. Die Reflektion des Lichtstrahls erfolgt üblicherweise in einem Prisma, vorzugsweise in einem retroreflektierenden Tripel-Prisma oder Tripelspiegel.
Die Messwerte (Richtung und Distanz werden bei den zeitgemässen elektronischen Tachymetern vollautomatisch elektronisch bestimmt. Das kann über kombinierte/angeschlossene Rechner erfolgen. Je nach vorhandenen Programmen kann mit dem elektronischen Tachymeter eine zweidimensionale oder dreidimensionale Abbildung von Bauwerken stattfinden.
Neueste motorisierte Tachymeter sind mit einer Verstellmechanik und einer Antriebsmechanik versehen, welche das automatische Anvisieren des Tripelprismas/spiegels und eine Zielverfolgung erlaubt. Ausserdem sind diese Tachymeter programmierbar, so dass sie in genauer Folge vollautomatisch mehrere Punkte vermessen können.
Ein Tripelprisma ist ein Glaskörper, der vom plan ist und rückseitig drei zueinander in einem Winkel von 90 Grad stehende unverspiegelte Flächen besitzt. Es reflektiert das Licht wie ein Spiegel, aber sehr viel verlustärmer.

In der DE 10 2007 014 727 wird darauf hingewiesen, dass in einem Tunnel nur sehr beengte Verhältnisse für eine Aufstellung der Messvorrichtung gegeben sind. Dabei wird in dieser Druckschrift von einem Stand der Technik mit ortsfesten Positionierungsmechaniken ausgegangen. Dies soll eine aufwendige Verschraubung und den Einsatz geeigneter Werkzeuge erforderlich machen.
In dieser Druckschrift wird als Alternative zu dem ortsfesten Einbau von Positionierungsmechaniken vorgeschlagen, das Stativ bei einem Tübbingausbau in die Fugen zwischen zwei benachbarten Tübbingen einzuklemmen. Die Klemmkraft soll gegebenenfalls mit Schrauben/Federkraft/Hebeln verstärkt werden.

Die Klemmung ist nur dort möglich, wo Fugen mit ausreichender Breite bestehen, die in der Lage sind, die Klemm-Mechanik aufzunehmen. Das ist nicht nur für die Fugendichtung von gravierendem Nachteil. Die Klemmung hat noch diverse andere Nachteile.

Die EP1408344 beschreibt ein Verfahren zur geodätischen Messung, bei dem die Tunnelwandung mit Laserscannern vermessen wird. Zugleich wird der Abstand des Laserscanners vom bestimmten Messpunkten gemessen. Daraus ergibt sich die Position des Laserscanners. Die Messwerte werden dann mit einem Rechner ausgewertet. Nachteilig an dem Verfahren wird angesehen, dass der Laserscanner nur einen verhältnismässig kleinen Messbereich hat. Deshalb ist eine Vielzahl von Messungen erforderlich. Dieser Nachteil wirkt sich umso stärker aus, je länger die Strecke ist.

Die DE102005012107 entwickelt die geodätische Messung nach der EP 1408344 weiter. Dabei werden diverse, Positionspunkte des Lasers gemessen und als Fixpunkte festgelegt.

Die DE3733553 beschreibt ein lasergesteuertes Vortriebsschild. Zur Positionsbestimmung des Schildvortriebes dient ein elektrischer Reflektor, der Signale aussendet. Alle Werte werden zur Maschinensteuerung in einem Rechner verarbeitet.

Die DE 102004010114 beschreibt ein Messverfahren zur Steuerung von Vortriebsmaschinen. Dabei wird eine besondere Schwierigkeit bei der Kurvenpressung von Rohren gesehen, weil keine optische Gasse durch die Kurve besteht. Um gleichwohl eine Lasermessung durchzuführen, ist eine Messung nach Art eines Polygonzuges vorgesehen. Der Laser soll mit einer Zieltafel zusammen wirken. Dabei bildet der Laserstrahl die Sollposition der Vortriebsmaschine. Es wird die Zieltafel an der Vortriebsmaschine befestigt und die Vortriebsmaschine so bewegt, dass der Laserstrahl in dem Zielfeld der Zieltafel auftrifft. Dann hat die Vortriebsmaschine ihre Sollposition erreicht.

Eine ähnliche Lösung schlägt die DE4017833 vor. Dabei finden für die Vermessung Theodolite und Reflektoren zur Vermessung unterirdischer Bauwerke Anwendung. Die Theodoliten dienen aber der Steuerung eines Vortriebsrohres oder eines Vortriebsschildes und wandern mit dem Vortriebsrohr oder dem Vortriebsschield mit. Für eine Nachvermessung ist das System nicht geeignet.

Auch die EP0730084 zeigt eine Vermessung unterirdischer Bauwerke mit einem Theodoliten und mehreren Zielpunkten. Diese Vermessungseinrichtung dient aber wieder der Steuerung der Vortriebsmaschine. Dabei sind der Tachymeter und die Zielpunkte an der Vortriebsmaschine angeordnet. Für eine Nachvermessung ist das System gleichermaßen nicht geeignet.

Die JP HO8-189827 zeigt mobile Tachymeter und Prismen. Die Prismen werden im Bauwerk montiert. Der mobile Tachymeter wird schrittweise durch das Bauwerk bewegt und vermisst dabei die Prismen. Dem vorgeschlagenen Messverfahren fehlt aber die notwendige Genauigkeit.

Die JP HO8-233575 zeigt eine weitere verfahrbare Meßvorrichtung mit einer Kamera oder einem TV-Gerät und Zielobjekten. Die Meßvorrichtung soll auf Schienen bewegt werden, die nur bei entsprechender vorherige Einmessung eine genaue Vermessung der Zielpunkte erlauben. Außerdem ist der vorgesehene Schienenaufbau für eine wiederholte Nachvermessung wirtschaftlich ungeeignet.

Die DE3120010 beschreibt ein Vermessungssystem für einen vorgepressten, gekrümmt verlaufenden Rohrstrang. Vorn an dem Rohrstrang befindet sich ein Schneidschuh bzw. Schneidrohr. Zur Steuerung des Schneidschuhes werden dabei Lichtstrahlen und Fadenkreuze sowie Laser und Empfänger und Abtastvorrichtungen als Stand der Technik erwähnt.

Nach der DE3120010 soll bei gekrümmtem Rohrverlauf ein Polygonzug ausgemessen werden. Innerhalb des Polygonzuges werden die Messpunkte und Abtastsysteme in einem fest vorgegebenen Abstand angeordnet. Während des Vorpressens bleiben die Abstände der Messpunkte konstant. Dieser Verfahrensvorschlag bevorzugt Leuchtdioden als Messpunkte und eine Ultraschallmessung.

Die DE69103610 beschreibt auch ein Lasersystem mit Referenzpunkten. Diese Druckschrift geht von der sogenannten "NATM"Tunnelvortriebsmethode aus. Die Vortriebsmethode betrifft den Sprengvortrieb. Beim Sprengvortrieb werden diverse Bohrungen in das Gebirge eingebracht, mit Sprengstoff gefüllt und verdämmt. Damit durch die Sprengung ein vorbestimmter Gebirgsausbruch entsteht, sollen die Bohrungen mit Hilfe von Lasern vermessen und markiert werden. Der Laser wird von Hand bewegt, auch wenn ein Computer bei der Einstellung hilft. Die Markierungen werden von Hand aufgebracht.

Ausserdem wird eine Automatisierung bei der Vermessung vorgeschlagen. Dabei ist ein geodätisches Lasersystem vorgesehen. Zu dem System sollen gehören: eine Lasermesseinheit zur Durchführung der Abstands- und Winkelmessungen, ein Laserprojektor zum Lenken des Laserstrahls auf einen Abbaustoss, eine Steuereinheit zum Festlegen der Messpunkte auf der Grundlage der geodätischen Daten. Dabei soll die Lasermesseinheit unabhängig vom Laserprojektor arbeiten.

Die DE 2607280 beschreibt ein Lasermessgerät, bei dem Lichtstrahlen mit Hilfe eines Prismas zerlegt und umgelenkt werden.

Die DE60734622 beschreibt gleichfalls Lasermessgeräte für Tunnelvortriebe. Die Laservorrichtung ist mit einer Kollimationseinrichtung zusammen. Solche Einrichtung ist bei Lasern üblich, um den Laserstrahl zu bündeln. Darüber hinaus ist in dieser Druckschrift die Verwendung eines Prismas vorgesehen.

Neueste Lasertracker sind hoch präzise Messinstrumente, die durch eine Kombination aus Winkel- und Distanzmessung die 3D-Punktkoordinaten eines Objektes erfassen. Die Distanzmessung erfolgt durch Laserinterferometer oder absolute Distanzmessung oder durch eine Kombination aus beidem.

Mit dem Laserscanner kann ein Laserstrahl erzeugt werden, der über einen rotierenden Spiegel auf die zu spannende Oberfläche projiziert wird. Aufgrund des Rotationsspiegels werden eine Unmenge von Messpunkten/Punktwolke erzeugt. Der Laserstrahl wird von der zu messenden Oberfläche reflektiert und trifft in Abhängigkeit der Entfernung zur Oberfläche des Objektes in unterschiedlichen Distanzen auf einen CCD-Chip auf. Die Distanzen zwischen dem Laser und den Punkten auf der Oberfläche des Objektes werden mittels Triangulationsverfahren bestimmt. Bestimmte Konturen des Objektes bilden sich als unterschiedliche Distanzen ab. Diese Daten können für eine anschliessende CAD-Datenerstellung genutzt werden.

### Aufgabe der Erfindung

Die Erfindung hat sich die Aufgabe gestellt, ein wirtschaftlicheres Vermessungssystem für unterirdische Bauwerke zu schaffen.

### Lösung der Aufgabe

Das wirtschaftlichere Vermessungssystem wird mit den Merkmalen des geltenden Hauptanspruches erreicht. Die Unteransprüche beschreiben bevorzugte Ausführungen. Dabei ist von den diversen bekannten Verfahren ein Verfahren als Ausgangspunkt der Entwicklung ausgewählt worden, bei dem in dem unterirdischen Bauwerk feste Messpunkte angelegt werden. Dies erscheint im Verhältnis zu den Verfahren, bei denen ganzflächig gescannt wird, an sich nicht zeitgemäss. Das heisst, die Erfindung hält teilweise an den überholt erscheinenden festen Messpunkten fest.
Die festen Messpunkte werden durch Prismen gebildet.
Die Prismen werden im Bauwerk positioniert. Ihre Position wird mit mindestens einem Tachymeter vermessen. Dabei werden die Vermessungsdaten von übertägigen Messpunkten abgeleitet, die in Form von Prismen am Rand des Schachtes angeordnet sind. Aus der Position dieser Prismen wird die Position eines auf der Schachtsohle angeordneten Tachymeters bestimmt. Über dieses Tachymeter und andere Tachymeter werden die Positionen der Prismen im Bauwerk bestimmt.
Die Prismen werden mit mobilen Tachymetern kombiniert, die mit einer Zielerkennung versehen sind.
Mobil werden die Tachymeter vorzugsweise durch Montage auf Fahrzeugen/Wagen. Wahlweise sind die Tachymeter zugleich als Fahrzeuge/Wagen ausgebildet. Das Fahrzeug kann darüber hinaus als Roboter ausgebildet sein.

Es eröffnen sich verschiedene Verfahrensmöglichkeiten, in Abhängigkeit von der Zahl der mit Tachymetern ausgerüsteten Fahrzeuge/mobilen Tachymeter:

### a) Messen mit einem Fahrzeug/mobilen Tachymeter verschiedener im Abstand voneinander im Bauwerk angeordneter Prismenkränze aus mehreren

### Prismen:

Zunächst Ableiten überirdischer Positionsdaten in den Schacht mittels eines auf der Schachtsohle stehenden Tachymeters.

Mobiler Tachymeter fährt zum ersten Prismenstandort;
Tachymeter auf der Schachtsohle vermisst den mobilen Tachymeter und die Prismen/Prismenkranz am ersten Prismenstandort;
Mobiler Tachymeter vermisst die Prismen/Prismenkranz am ersten Prismenstandort und am nächsten(zweiten) Prismenstandort;
Mobiler Tachymeter fährt zum zweiten Prismenstandort und vermisst dort die Prismen/Prismenkränze am ersten, zweiten und nächsten(dritten) Prismenstandort.

### b) Messen mit zwei Fahrzeugen/mobilen Tachymetern verschiedener im Abstand voneinander im Bauwerk angeordneter Prismenkränze aus mehreren

### Prismen:

Zunächst Ableiten überirdischer Positionsdaten in den Schacht mittels eines auf der Schachtsohle stehenden Tachymeters;
Erster mobiler Tachymeter fährt zum zweiten Prismenstandort;
Zweiter mobiler Tachymeter fährt zum ersten Prismenstandort;
Tachymeter im Schacht vermisst zweiten mobilen Tachymeter und die ersten Prismen/Prismenkranz;
Zweiter mobiler Tachymeter vermisst den Tachymeter im Schacht, die ersten Prismen/Prismenkranz; zweiten Prismen/Prismenkranz und dritten Prismen/Prismenkranz und den ersten mobilen Tachymeter;
Erster mobiler Tachymeter vermisst die zweiten Prismen/Prismenkranz, dritten Prismen/Prismenkranz und die nächsten (vierten) Prismen/Prismenkranz sowie denz weiten mobilen Tachymeter;

### c) Messen mit drei Fahrzeugen/mobilen Tachymetern verschiedener im Abstand voneinander im Bauwerk angeordneter Prismenkränze aus mehreren

### Prismen:

Zunächst Ableiten überirdischer Positionsdaten in den Schacht mittels eines auf der Schachtsohle stehenden Tachymeters;
Erster mobiler Tachymeter fährt zum dritten Prismenkranz;
Zweiter mobiler Tachymeter fährt zum zweiten Prismenkranz;
Dritter mobiler Tachymeter fährt zum ersten Prismenkranz;
Tachymeter im Schacht vermisst den dritten mobilen Tachymeter und die ersten Prismen/Prismenkranz
Dritter mobiler Tachymeter vermisst den Tachymeter im Schacht, die ersten Prism/Prismenkranz, zweiten Prismen/Prismenkranz und den zweiten mobilen Tachymeter
Zweiter mobiler Tachymeter vermisst die ersten Prism/Prismenkranz, zweiten Prismen/Prismenkranz, die dritten Prismen Prismenkranz, den dritten mobilen Tachymeter und den ersten mobilen Tachymeter;
Erster mobiler Tachymeter vermisst die zweiten Prismen/Prismenkranz, die dritten Prismen/Prismenkranz, die vierten Prismen Prismenkranz und den zweiten mobilen Tachymeter;
Erster mobiler Tachymeter fährt zum vierten Prismenkranz, zweiten mobilen Tachymeter, dritten mobilen Tachymeter
Dritter mobiler Tachymeter fährt zum zweiten Prismenkranz
Dritter mobiler Tachymeter vermisst den ersten Prismenkranz, zweiten Prismenkranz, dritten Prismenkranz und zweites mobiles Tachymeter;
Zweiter mobiler Tachymeter vermisst den zweiten/Prismenkranz, dritten Prismenkranz, vierten Prismenkranz, und erstes mobiles Tachymeter und drittes mobiles Tachymeter;
Erstes mobiles Tachymeter vermisst den dritten Prismenkranz, vierten Prismenkranz und fünften Prismenkranz und das zweite mobile Tachymeter;

Bei vorstehenden Vermessungsvarianten ist der erste mobile Tachymeter der erste Tachymeter im Bauwerk/Kanal in Richtung der Vortriebsmaschine; das zweite mobile Tachymeter ist das zweite Tachymeter im Bauwerk/Kanal in Richtung der Vortriebsmaschine; das dritte mobile Tachymeter ist das dritte Tachymeter im Bauwerk/Kanal in Richtung der Vortriebsmaschine.

Die Fahrzeuge/Wagen können so weit an die Prismen heran gesteuert werden, bis die Prismen innerhalb der Zielerfassung des Tachymeters liegen. Vorzugsweise sind die Fahrzeuge mit einer programmierbaren Steuerung versehen. Dabei kann sich die Steuerung in einer Variante auf eine Ein/Aussteuerung des Antriebsmotors beschränken. In Verbindung mit einem Schrittmotor kann der Fahrweg des Fahrzeuges leicht und sicher bestimmt werden. Die Schrittmotore werden vorzugsweise elektrisch betrieben. Sie bestehen aus einem Rotor und einem Stator. Der Rotor ist drehbeweglich angeordnet und beinhaltet eine elektrische Spule, die bei Beaufschlagung mit Strom ein Magnetfeld erzeugt. Der Stator ist fest angeordnet und beinhaltet, mehrere Spulen, die gleichfalls mit Strom beaufschlagt werden, ein Magnetfeld erzeugen und den Rotor dadurch zwingen, eine bestimmte Lage einzunehmen. Das wird unter fortlaufender Änderung der Strombeaufschlagung genutzt, um den Rotor in eine schrittweise Drehbewegung zu zwingen. Die Zahl der Änderungen der Strombeaufschlagung und Damit die Zahl der Schritte kann elektronisch vorgegeben werden. Die Zahl der Änderungen der Strombeaufschlagung und die damit verbundene Zahl der Schritte kann eine Vielzahl von Umdrehungen zur Folge haben.
Die Bewegung des Rotors setzt sich aus einer Vielzahl von Schritten zusammen, die sich aneinander anschließen können, so daß es nicht zu einer ruckartigen Bewegung, sondern zu einer fließenden Bewegung des Rotors und damit zu einer fließenden Bewegung des Fahrzeuges kommt.

Vorzugsweise orientiert sich die Vorgabe für den Schrittmotor.an der Planung des Bauwerkes. Bei einem Rohrvortrieb für einen Kanal wird vorzugsweise im Rohrverlegungsplan festgelegt, wo die Fahrzeuge in dem Bauwerk anhalten. In dem Rohrverlegeplan ergeben sich dabei Maße, die entsprechend dem Maßstab der Ansicht als Vorgabe in die Fahrzeugsteuerung übernommen werden können.

Auch mehrfacher Halt kann ohne weiteres in die Steuerung eingegeben werden.

Die Zielerfassung beinhaltet eine Beweglichkeit des Tachymeters, so dass dessen Messstrahl die Umgebung absucht, bis er ein Prisma findet und dort reflektiert wird. Neuere Tachymeter besitzen bereits eine Verschwenkbarkeit um eine vertikale Achse, die eine vollständige Drehbewegung um diese Achse erlaubt. Zugleich besitzen die neueren Tachymeter auch eine erhebliche Verschwenkbarkeit um eine horizontale Achse. Dies ist verbunden mit einem elektrischen Schwenkantrieb und einer elektronischen, programmierbaren Steuerung. Infolgedessen können neuere Tachymeter darauf programmiert werden, an den Seiten und in der Firste des Bauwerks nach den Prismen zu suchen. Sobald ein Prisma gefunden ist, kann die Vermessung beginnen. Die Programmierung des Tachymeters erlaubt es, die Arbeitsschritte "Zielsuche" und "Vermessung nach Zielfinden" mit einander zu verknüpfen, so daß nach dem Zielfinden automatisch die Vermessung beginnt.

Sobald die Vermessung eines Prismas durch das Tachymeter beendet ist, sucht das Tachymeter nach dem nächsten Prisma. Die Zahl der gesuchten Prismen je Standort läßt sich gleichfalls programmieren. Vorzugsweise wird dabei für die jeweils zu vermessenden Prismen ein Code eingegeben.
Dazu können die Prismen mit einer Target-ID-Funktion versehen werden. Diese Funktion kann die gleiche sein wie bei der Zielsuche und Zielerkennung eines Trimble-Tachymeters. Die Target-ID sendet einen nicht sichtbaren Infrarotstrahl aus, auf den ein Code aufmoduliert ist. In einer anderen Variante wird der Laserstrahl des Tachymeters von dem Prisma in veränderter Form reflektiert.
Auf beiden Wegen erhält man eine eindeutige Identifizierungsmöglichkeit für diesen Zielstrahl und für das damit verbundene Ziel. Die Zahl der Codes ist in weiten Grenzen wählbar. Zum Beispiel können acht Codes wählbar sein. Entsprechend ist die Zahl der identifizierbaren Prismen. Wenn die Suche nach einem Prisma mit einem Tachymeter gestartet wird, so wird dann nach einem aktiven Zielstrahl gesucht, der einen bestimmten Code trägt. Empfängt der Sensor im Tachymeter ein solches Infrarotsignal, so decodiert er die aufmodulierte Information. Ist die empfangene Information mit der gesetzten Information identisch, so ist das richtige Ziel gefunden und erfolgt eine Scharfstellung auf das Prisma. Differiert die aufmodulierte Information von der im Tachymeter gespeicherten Information oder ist keine Information aufmoduliert, so bleibt das Prisma bei der Suche unbeachtet. Auf diese Weise werden nur die richtigen/gewünschten Prismen von dem Tachymeter berücksichtigt.

Wenn alle vorbestimmten Prismen an einem Vermessungsstandort vermessen worden sind, schaltet die Steuerung des Tachymeters auf Ruhe und wird der Fahrzeugsteuerung Kontakt für die nächste Fahrzeugbewegung bis zum nächsten Halt gegeben.

Vorzugsweise ist die Fahrzeugsteuerung in einem Rechner außerhalb der Fahrzeuge untergebracht. Noch weiter bevorzugt ist der Rechner außerhalb des Bauwerkes vorgesehen. Der Rechner erlaubt es, sämtliche Meßdaten des Tachymeters aufzunehmen.

Vorzugsweise werden mehrere Fahrzeuge gemeinsam gesteuert. Das kann eine gleichzeitige gemeinsame Bewegung der Fahrzeuge einschließen. Anstelle oder zusätzlich zu der gemeinsamen Bewegung der Fahrzeuge kann auch eine Einzelbewegung der Fahrzeuge vorgesehen sein. Einzelbewegung heißt auch: Bewegung der Fahrzeuge nacheinander.
Die Bewegung der Fahrzeuge nacheinander hat den Vorteil, daß nach störungsfreiem Erreichen eines Zieles mit dem ersten Fahrzeug davon ausgegangen werden kann, daß auch die anschließend in Gang gesetzten Fahrzeuge störungsfrei ihre Planstellungen erreichen. Die Planstellungen der Fahrzeuge sind von verschiedenen Planungsvorgaben abhängig. Dazu gehört die Wegführung mit allen Trassierungselementen. Die Wegführung kann abschnittsweise erfolgen. Das kann verschiedene Gründe haben, zum Beispiel zur Darstellung einer Kurvenfahrt.

Der Datentransfer zwischen Tachymeter und Rechner und zwischen Fahrzeug und Rechner erfolgt vorzugsweise drahtlos. Drahtlose Datenübertragung findet vorzugsweise auf Basis elektromagnetischer Wellen oder Lichtimpulse statt. Auch andere Signale können zur Steuerung der erfindungsgemäßen Fahrzeuge und Messeinrichtungen verwendet werden. Bei Lichtimpulsen wird vorzugsweise mit infrarotem Licht gearbeitet. Einen sehr hohen Stellenwert bei der drahtlosen Datenübertragung haben Funkwellen. Dabei wird im hochfrequenten Bereich (HF), sehr hoch frequenten Bereich (VHF) und dem Ultrahochfrequenten Bereich (UHF) gearbeitet.
Die zu übertragenden Daten werden den Funkwellen aufmoduliert. Für die Funkwellen-Datenübertragung werden üblicherweise angeboten:
Mobilfunkmodem, Datenfunkgerät, WLAN-Ausstattung, Bluetooth-Ausstattung.

Die Datenfernübertragung schließt auch die Möglichkeit zur Zwischenschaltung von Verstärkern/Repeatern ein.
Beispielsweise kann bei der Steuerung wie folgt vorgegangen werden:
Zuerst werden die Tachymeter mit dem automatischen Dreifuß horizontiert. Sodann bekommen die Tachymeter ein Signal, die einzelnen Messprismen auf den Fahrzeugen und an der Bauwerkswand/First selbständig zu suchen, anzuzielen und eine Messung durchzuführen. Wahlweise wird dabei die Zahl der Wiederholungsmessungen voreingestellt oder durch Steuerungsbefehle individuell bestimmt.
Bei jeder Vermessung eines Messgerätes (Tachymeter und Prismen) ist eine Kodierung von Vorteil. Damit können die einzelnen Vermessungsdaten besser individualisiert werden. Vorzugsweise werden alle Steuerungsdaten und Messdaten gespeichert. Das ermöglicht einen Vergleich bei einer Rückmessung. Sind die Abweichungen der Messungen zu groß, kann der Messvorgang sofort wiederholt werden. Die Entscheidung kann automatisiert, aber auch individuell vom Vermessungspersonal erfolgen.
Durch die Erfindung werden Kontrollen leichter und erübrigt sich eine manuelle Nachvermessung.

Günstig ist, das Tachymeter mit Hilfe eines handelsüblichen Dreifusses in die Lotrechte/Vertikale zu bringen. Neuere Dreifüsse sind in allen Richtungen verstellbar. Die Verstellbarkeit dient herkömmlich zur Einstellung des Tachymeters auf die Vertikale (Abloten). Neuere Geräte können eine automatische, rechnergestützte Einstellung besitzen.

Die Zielsuche und Zielfindung des Tachymeters wird handelsüblich zum Beispiel von den Firmen Leica und Zeiss angeboten. Dabei bieten die bekannten Tachymeter zugleich eine Grobzielsuche und eine Feinzielsuche. Zur Grobzielsuche wird der Laserstrahl zumeist vertikal aufgefächert und erfolgt eine.Drehung um die Stehendachse des Gerätes. Sobald eine Reflektion des Laserstrahles durch einen Reflektor/Prisma von dem Tachymeter aufgefangen wird, wird die Drehung um die Stehendachse/Vertikalachse angehalten. Damit liegt eine Ebene fest, in welche der Reflektor/Prisma liegt. Wenn das Tachymeter darüber hinaus noch in einer zweiten Ebene bewegt wird, die quer zu der ersten Ebene liegt, ergibt sich eine genaue Lage des Reflektors/Prismas. Das wird durch Verschwenken des Tachymeters um eine andere Achse(Liegendachse) erreicht, die quer zur Stehendachse steht.

Vorzugsweise finden Reflektoren/Prismen Anwendung, die schwenkbar sind.
Günstig ist eine kardanische Aufhängung. Solche Prismen können in alle Richtungen auf die Tachymeter ausgerichtet werden. Das Ausrichten ist in geraden Messstrecken leichter als in gebogenen Messstrecken. Dem wird durch Verkürzung der Messstrecke Rechnung getragen. Das heißt, wenn eine Messstrecke in einem Kanal üblicherweise etwa 100 m lang ist, wird üblicherweise in bogenförmigen Messstrecken eines Kanals eine Messstreckenlänge von 50m gewählt.

Die Ausrichtung der Prismen kann bei deren Montage erfolgen. Dabei können gleiche Prismenstellungen gewählt werden, wenn das Tachymeter in Grenzen immer die gleiche Stellung in Bezug auf das zu vermessende Prisma hat. Andererseits können bei gleicher Tachymeterstellung in Grenzen auch abweichende Prismenstellungen akzeptiert werden. Es kann auch beides unter Berücksichtigung anderer Grenzen entstehen. Die Grenzen beziehen sich auf die Abweichungen des Reflektionsstrahles eines Prismas von dem Messstrahl eines Tachymeters auf das Prisma.

Soweit nicht nur die Prismen sondern auch das Tachymeter in der Bauwerksplanung einen genauen Standort erlangt und soweit dieser Standort annähernd eingenommen wird, können .die Prismenstellungen vor dem Beginn der Vermessung auf eine Tachymeterposition eingestellt werden, welche die Tachymetererst im Verlauf der Messung einnehmen.

Besonders leicht ist die Ausrichtung der Prismen, wenn vorgesehen ist, daß die Tachymeter unter den im Bauwerk vorgesehenen Prismen positioniert werden. Dann werden die Tachymeter senkrecht gegen die Bauwerkswand mit den daran befestigten Prismen gerichtet. Der Tachymeter-Messstrahl trifft die Prismen auch aus unterschiedlichen Entfernungen sicher. Unterschiedliche Entfernungen ergeben sich bei anderen Bauwerksabmessungen.
Mit dieser Anordnung der Tachymeter eröffnen.sich besondere Messverfahren. Besonders vorteilhaft ist dabei, eine Vielzahl mobiler Tachymeter in die vorstehend beschriebene Position zu bringen und miteinander zu vermessen, so daß eine gesicherte Basis für die Vermessung der an der Bauwerkswandung angeordneten Prismen gegeben ist.

Sofern die Tachymeter in einiger Entfernung von den an der Bauwerkswandung angebrachten Prismen angeordnet werden müssen, kann eine andere Verfahrensweise zweckmäßig sein. Für eine Vermessung der Prismen aus unterschiedlichen Entfernungen im Bauwerk kann es verschiedene Gründe geben, zum Beispiel eine gewünschte mehrfache Vermessung oder eine in der Nähe der Prismen nachlassende Genauigkeit des Tachymeters. Dann gilt:
Je geringer der Höhenunterschied von Tachymeter und Prisma ist, desto leichter ist eine ausreichende Reflektion der Tachymetermessstrahlen von dem Prisma in die Optik des Tachymeters erreichbar. Bei Gefällestrecken wie in einem Kanal ist die ausreichende Reflektion umso leichter erreichbar, je geringer die Abweichung der durch Prisma und Tachymeter gehenden Geraden von der Gefällelinie ist

Wenn die Prismen dagegen allein auf einen bestimmten Punkt, insbesondere die Mitte des Bauwerkes hinweisen können, ergibt sich eine wesentliche Vereinfachung.

Die Einstellung der Prismen auf das Tachymeter kann mit einer Zieltafel erleichtert werden, auf der die in der Planung vorgesehene Tachymeterposition markiert ist und die an der Planungsstelle im Bauwerk positioniert wird.

Etwas anderes ergibt sich auch bei der Verwendung von Fahrzeugen zum Transport und Halterung der Tachymeter, wenn deren Stellung im Bauwerk nicht ausreichend genau vorbestimmt werden konnte. Dann kann sich ein Bedarf zur Korrektur der Prismenstellung während der Vermessung ergeben. Für die Korrektur der Prismenstellung können die Prismen nach der Erfindung mit einer motorischen Verstellung und einer Funksteuerung versehen werden. Dabei können elektrische Mikromotore mit geringer Leistung Anwendung finden, die in den Schwenkachsen/Schwenklagern der Prismen angeordnet sind. Diese Motoren lassen sich mit den Positionsdaten steuern, die sich aus der Planungs-Position jedes Prismas und durch die Tachymeterstellung ergeben, die das Tachymeter aus bereits vorher vermessenen Prismen ableiten kann und der Prismensteuerung im Wege der Fernübertragung übermittelt.

Nach der Erfindung ist eine schrittweise Vermessung des Bauwerkes vorgesehen. Jeder weitere Vermessungsschritt soll sich mit dem vorhergehenden Vermessungsschritt überlappen.

Die Überlappung entsteht dadurch, dass die Vermessung eines weiteren Vermessungsschrittes von einem vermessenen Prisma oder von dem Tachymeter aus dem vorhergehenden Vermessungsschritt ausgeht.
Dabei sind vorgesehen, mindestens ein Tachymeter und eine Anzahl von Prismen, die sich auf alle Vermessungsstandorte mit Prismen verteilen.
Wenn ein Prisma in Richtung der hintereinander erfolgenden Vermessungsschritte den ersten Vermessungspunkt mit gesicherten Positionsdaten bildet, so wird der in Vermessungsrichtung nächste Vermessungspunkt mit Hilfe des Tachymeters festgelegt.
Das geschieht durch Verfahren des Tachymeters in Richtung der hintereinander erfolgenden Vermessungsschritte vor das Prisma. Das Fahrzeug kann an beliebiger Stelle oder an einer vorgeplanten Stelle im Bauwerk angehalten werden. Nach Anhalten des Fahrzeuges wird das Prisma, an dem das Tachymeter vorbeigefahren ist, mit dem Tachymeter erfasst und Lage, Höhe und Distanz des Tachymeters aus der Position des Prismas abgeleitet.

Nach der Vorbeifahrt des Tachymeters an dem zuletzt vermessenen Prisma, wird das Prisma mit dem Messstrahl des Tachymeters aus einer ganz anderen Richtung angestrahlt. Diese Richtung steht mehr oder weniger entgegengesetzt zu der Messstrahlrichtung bei der vorhergehenden Vermessung. Nach der Erfindung wird das Prisma dazu
a)automatisch gedreht
b)in Ausbildung als 360-Grad-Prisma verwendet
c)als Doppelprisma ausgebildet

Bei der automatischen Drehung kann die notwendige Genauigkeit dadurch gewahrt werden, dass für die Drehung eine Mechanik Anwendung findet, wie sie auch im Tachymeter für die oben beschriebene Satzmessung vorhanden ist.

Die 360-Grad Prismen bieten sich systembedingt für obige Aufgabe an. Jedoch ist die Genauigkeit bekannter 360-Grad-Prismen für den erfindungsgemäßen Einsatz noch verbesserungsbedürftig.

Die Doppelprismen beinhalten die Kombination von zwei Prismen in einer Vorrichtung, von denen das eine Prisma in die eine Richtung und das andere Prisma in die entgegengesetzte Richtung zeigt. Wahlweise sind die beiden Prismen in einem gemeinsamen Gehäuse angeordnet. Das gemeinsame Gehäuse definiert die Lage und Höhe der beiden Prismen. Das schließt wahlweise eine Anordnung ein, bei der kein Abstand zwischen beiden Prismen in der Vermessung zu berücksichtigen ist. Das schließt wahlweise auch einen Abstand zwischen beiden Prismen ein, der als gemessene Größe in die Vermessungsrechnung einfließt. Dies erfolgt vorzugsweise durch entsprechende Programmierung der Tachymeter automatisch. Die beiden Prismen eines Doppelprismas können auch untereinander oder übereinander angeordnet werden. Vorzugsweise auf einer gemeinsamen Stehendachse, noch weiter bevorzugt mit unabhängiger Schwenkbarkeit und definierter Abstand auf der Stehendachse. Auch das kann als zusätzliche Größe in der Vermessungsrechnung automatisch berücksichtigt werden.

Für den nächsten Vermessungsschritt in Richtung der hintereinander erfolgenden Vermessungsschritte wird das Prisma an der nächsten geplanten Stelle mit dem Tachymeter vermessen. Das Tachymeter bleibt während dessen an dem erlangten Standpunkt stehen. Danach setzt sich der Vermessungsvorgang mit einem weiteren Vermessungsschritt fort. Das schließt eine Vorbeifahrt des Tachymeters an dem zuletzt vermessenen Tachymeter, die Vermessung seiner Position durch erneute Vermessung des zuletzt vermessenen Prismas aus der neuen Tachymeterposition und die Vermessung des noch nicht vermessenen nächsten Prismas ein.

Wahlweise kann eine überlappende Vermessung der verschiedenen Vermessungsschritte mit Hilfe mindestens eines weiteren Tachymeters auch in der Weise erfolgen, daß nur in Richtung der einander folgenden Vermessungsschritte vermessen wird. Dann werden die Prismen nicht mehr in den einander entgegen gesetzten Richtungen mit Messstrahlen beaufschlagt.
Die Verfahrensweise ist möglich, wenn ein Abstand zwischen den Tachymetern eingehalten wird, so daß
a)das ein erstes Tachymeter in seiner Messstellung zwischen zwei unmittelbar benachbarten Prismen angeordnet ist, wie oben beschrieben, und
b)das zweite Tachymeter in seiner Messtellung zwischen zwei Prismen angeordnet ist, von denen mindestens ein Prisma nicht mehr unmittelbar benachbart zu dem ersten Tachymeter ist.

Vorzugsweise kommen mehrere Tachymeter zum Einsatz, wobei die Tachymeter an dem Prismenstandort positioniert werden und die Prismen auf die Tachymeter ausgerichtet werden. Die weitere Vermessung basiert auf der Überlegung, die Position der Tachymeter zu bestimmen und danach mit den Tachymetern die Position der im Bauwerk positionierten Prismen zu bestimmen.

Die Vermessung der Position eines Tachymeters durch ein anderes Tachymeter wird einfacher, wenn die Tachymeter zumindest teilweise zugleich mit Prismen kombiniert werden oder zumindest teilweise zugleich als Prisma ausgebildet sind.
Das mit einem Prisma versehene Tachymeter läßt sich mit einem anderen Tachymeter in üblicher Weise vermessen. Dabei wird der Messstrahl von dem Prisma reflektiert und werden aus der Reflektion die Positionsdaten des anderen Tachymeters gewonnen.

In der Anwendung des zweiten Tachymeters wird die Vermessung der im Bauwerk vorgesehenen Prismen aus entgegengesetzter Richtung entbehrlich, weil die beiden Tachymeter miteinander vermessen werden können. Das heißt, die Position des zweiten Tachymeters kann aus der Position des ersten Tachymeters abgeleitet werden.
Das gilt sowohl für obige Variante im Fall mehrerer Vermessungen der im Bauwerk positionierten Prismen aus unterschiedlichen Entfernungen, wie auch für obige Variante im Fall der Tachymeter, die unmittelbar im Bereich der im Bauwerk positionierten Prismen angeordnet sind.

Das zweite Tachymeter kann die Position des noch unvermessenen, unmittelbar benachbarten Prismas im Bauwerk auf Basis der eigenen Positionsdaten vermessen. Auch das zweite Tachymeter wird von einem Fahrzeug getragen und vorzugsweise wie der erste Tachymeter automatisch gesteuert. Die Steuerung erfolgt vorzugsweise mittels des Rechners, der auch für die Steuerung des ersten Tachymeters verwendet wird.

Mit der Verwendung von einer Vielzahl von Prismen und der Verwendung eines oder mehrerer automatisch verfahrenbarer Tachymeter wird eine mannlose Vermessung möglich. Die automatische Vermessung kann sich über einen Teil der Bauwerkslänge erstrecken, vorzugsweise mindestens über 1/3 der Bauwerkslänge, noch weiter bevorzugt über 2/3 der Bauwerkslänge und höchst bevorzugt über die Gesamtlänge des Bauwerks.

Zumindest über die vorgesehene Bauwerkslänge mit mannloser Vermessung ist eine Bestückung des Bauwerks mit Prismen Bestandteil der Erfindung. Vorzugsweise ist in jedem Fall eine Bestückung der Bauwerke über die Gesamtlänge gegeben.
Die Zahl der dafür notwendigen Prismen bleibt dabei überschaubar; desgleichen die mit den Prismen verbundenen Kosten.
Das gilt auch dann, wenn die an jedem Prismenstandort/Verinessungspunkt mehrere Prismen, zum Beispiel in Form eines Prismenkranzes vorgesehen sind.
Prismenkränze erlauben parallele Messungen zu einem oder mehreren Vermessungsschritten. Dies kann zur Kontrolle der Vermessung sehr vorteilhaft genutzt werden.

Von Vorteil ist auch, die Prismen lösbar im Bauwerk anzuordnen. Vorzugsweise werden die Prismen an den Bauwerksseiten und an der Bauwerksfirste montiert. Von Vorteil ist eine lösbare Verklebung der Prismen im Bauwerk. Damit wird das Bauwerk nicht beeinträchtigt. Es kann auch eine andere Befestigung der Prismen erfolgen. Allerdings sind Bohrungen regelmäßig unerwünscht, um das Bauwerk nicht zu beeinträchtigen.

Zu den weiteren Montagemöglichkeiten gehört auch eine vorhergehende Anbringung einer Halterung im Bauwerk, an der die Prismen dann montiert werden können. Die Halterung besteht dabei vorzugsweise aus Stahl und wird ihrerseits auf der Bauwerksfläche geklebt oder geklemmt oder in sonstiger Weise befestigt. Bei Verwendung von Stahl ist es möglich, die Prismen mit einem Magneten auszurüsten, so dass die Prismen lediglich mit der Halterung in Berührung gebracht werden müssen, um von dem Magneten in Messstellung gehalten zu werden. Die Anbringung wie auch das Abnehmen der Prismen verursacht nur minimalen Aufwand.
Die anklebbare Halterung kann die Form eines dünnen flexiblen Stahlbleches besitzen, das sich jeder Form der Bauwerksfirste oder der Bauwerksseitenwand anpasst. Das Stahlblech kann eine Dicke von wenigen Zehntelmillimetern besitzen, zum Beispiel eine Dicke von kleiner 0,3mm, vorzugsweise eine Dicke kleiner 0,2mm, noch weiter bevorzugt eine Dicke von 0,1mm.
Das Stahlblech kann in Längsrichtung des Bauwerkes durchgehend verlegt werden.
Günstig ist die Verwendung von Stahlblechabschnitten. Für die Abschnitte ist von Vorteil, wenn bei der Bauwerksplanung ein Rohrverlegeplan erstellt wird und dabei zugleich die Stellen markiert werden, an denen ein Messpunkt für die Vermessung des Bauwerkes liegen soll. Dann können die Stahlblechabschnitte an den durch Markierung vorbestimmten Stellen im Bauwerk verklebt werden. Mit dem Rohrverlegeplan kann die Zahl der Vermessungsschritte und damit auch der Vermessungsaufwand minimiert werden. Dies ist ohne Verlegeplan üblicherweise weitaus schwieriger. Soweit die Zahl der Vermessungsschritte nicht von entscheidender Bedeutung ist, kann die Länge der Vermessungsschritte unter Erhöhung der Zahl der Vermessungsschritte verringert werden.

Die Stahlbleche besitzen als Halterungen für die beschriebenen Prismen vorzugsweise eine Dicke kleiner/gleich 0,5m, weiter bevorzugt eine Dicke kleiner/gleich 0,4m und höchst bevorzugt eine Dicke kleiner/gleich 0,3m.
Die Stahlbleche besitzen vorzugsweise eine Breite kleiner/gleich 0,3m, noch weiter bevorzugt eine Breite kleiner/gleich 0,2m und höchst bevorzugt eine Breite kleiner/gleich 0,1m.
Die Bleche werden wahlweise von der Rolle abgezogen und abgelängt. Die Länge der Abschnitte ist vorzugsweise kleiner/gleich 1m, noch weiter bevorzugt kleiner/gleich 0,75m und höchst bevorzugt kleiner/gleich 0,5m.

Die Halterung für die Prismen kann bleibend im Bauwerk montiert werden. Vorzugsweise ist eine lösbare Befestigung im Bauwerk vorgesehen, um die Prismen nach der Vermessung eines Bauwerkes einer Vermessung in einem anderen Bauwerk zuzuführen.

Der Vorteil des erfindungsgemässen Verbleibens von Prismen ist ihre Nutzung bei der Vermessung in überlappenden Vermessungsschritten und gegebenenfalls die Möglichkeit ihrer Nutzung für ein gewünschtes Nachmessen.

Wahlweise sind die Prismen an der Berührungsfläche mit dem Bauwerk klebrig ausgebildet. Das kann mit einem beidseitig klebenden Band erfolgen. Solche Bänder sind für Randdämmstreifen aus Kunststoffschaum bekannt. Solche Klebestreifen besitzen Kleber auf bituminöser Basis oder Acrylatkleber, die nach Kehren oder Fegen der betreffenden Bauwerksfläche trotz des verbliebenen Restschmutzes haften. Gleichwohl sind die Klebebänder extrem preisgünstig und eignen sich hervorragend als Verbrauchsmaterial. Ihre Handhabung ist leicht
Vor dem Verkleben sind die Klebebänder an den Klebeflächen abgedeckt.
Zum Verkleben wird eine Abdeckung des Klebebandes abgezogen und der Klebestreifen auf die vorgesehene Fläche gedrückt. Nach dem Gebrauch lassen sich die Klebebänder wieder abziehen.
Vorzugsweise wird jedes Prisma mit einem Klebeband vorbereitet.
Zur Montage eines Prismas für die Vermessung wird die verbliebene Abdeckung abgezogen und das Prisma mit der klebrigen Unterseite auf die vorgesehene Bauwerksfläche gedrückt.
Das Prisma bleibt danach sicher in seiner gewählten Stellung an der Bauwerksfläche.

Es ist von Vorteil, wenn auch kurze Klebebandabschnitte durch die Vermessungsmannschaft von einer Klebebandrolle geschnitten werden. Wahlweise können aber auch vorbereitete Klebestücke beigestellt werden.
Die Klebestreifen und Klebestücke lassen sich nach einmaligem oder mehrmaligem Gebrauch an den Prismen erneuern.

Die Handhabung der Prismen kann auch noch dadurch erleichtert werden, dass Abziehlaschen an den Klebestreifen vorgesehen sind. Die Abziehlaschen können durch ein überstehendes Ende des Klebestreifens gebildet werden.

Soweit geklebte Halterungen vorgesehen sind, an denen die Prismen mit Magnetkraft gehalten werden können, kann die Klebung auf eine bestimmte Zeit, temporär, oder auf unbestimmte Zeit, bleibend, ausgelegt werden. Für eine temporäre Halterung sind die beschriebenen Klebebänder geeignet.
Für eine bleibende Klebung sind Baukleber wie Polyurethan-Kleber geeignet.

Wahlweise liegen die durch die Prismen gebildeten Messpunkte nur an einer Seite der unterirdischen Bauwerke. Wahlweise liegen die Messpunkte aber auch an verschiedenen Seiten des Bauwerkes. Mit den verschiedenen Messpunkten kann der Refraktion im Bauwerk Rechnung getragen werden. Bei der Refraktion wird die Brechung von Wellen beim Durchgang durch Medien bezeichnet. Je nach Medium kann es dabei zu erheblichen Unterschieden kommen, die in der Geodäsie berücksichtigt werden.

Die Messpunkte aus den Prismen und/oder Tachymetern können in Längsrichtung der Kanäle und anderen unterirdischen Bauwerken auf einer geraden oder anders verlaufenden Linie hintereinander liegen. Dabei können die Messpunkte an einer Seite oder mehreren Seiten des Bauwerkes liegen. Wenn zugleich Messpunkte an mehreren Seiten liegen, so können auch mehrere Messpunkte auf einer gemeinsamen Umfangslinie des Kanals oder anderen unterirdischen Bauwerkes liegen.

Die Abstände der Messpunkte in dem Bauwerk werden vorzugsweise bei der Bauplanung festgelegt.

Je nach Region kann es vorkommen, dass zunächst unterirdische Räume ohne Ausbau fertig gestellt werden. Das setzt jedoch ein selbsttragendes Erdreich/Gebirge voraus.
Viel häufiger ist ein nicht selbsttragendes Erdreich/Gebirge.
Das selbsttragende Erdreich/Gebirge erlaubt es, zunächst unterirdische Räume im Wege des Vortriebes zu erstellen und erst anschliessend mit einem Ausbau zu versehen. Das bedingt die Vermessung während des Vortriebes.
Dabei müssen die Messpunkte bzw. die betreffenden Teile der Messeinrichtung/Vorrichtung in erfindungsgemässer Weise vor dem Ausbau eingebracht werden.

Bei nicht selbsttragendem Erdreich/Gebirge, ist es üblich, gleichzeitig oder spätestens kurzfristig nachlaufend zum Vortrieb den Ausbau einzubringen. Das gilt zum Beispiel für den Ausbau mit Tübbingen, im Bergbau zum Beispiel für den Ausbau mit nachgiebigem Stahlausbau. Der Vortrieb kann dabei jeglicher Art sein. Besonders häufig ist der Vortrieb mit Fräsmaschinen.

Bestimmte Vortriebsverfahren sind systembedingt mit gleichzeitigem Ausbau verbunden. Das gilt zum Beispiel für den oben erläuterten Pressvortrieb.

Sowohl bei gleichzeitigem Ausbau als auch bei nachlaufendem Ausbau können die Rohre mit Messpunkten in erfindungsgemässer Weise ausgerüstet werden. Beim Pressvortrieb wandern die Messpunkte mit den Rohrstücken/Rohrabschnitten mit fortschreitendem Ausbau. Bei anderem Ausbau wie dem Tübbingausbau oder dem Stahlausbau im Bergbau bleiben die einmal vorgesehenen und vermessenen Messpunkte vorzugsweise erhalten.
Das heisst, je nach Ausbau ergeben sich feste Messpunkte und oder mit dem Ausbau wandernde Messpunkte.

Entsprechend der Planung muss die Vortriebsmaschine eingemessen werden. Danach ergibt sich beim Vortrieb ein Einstellungsbedarf/Steuerungsbedarf aufgrund von üblichen Abweichungen der Vortriebsmaschine von der Planungsposition. Für die Einstellung erfolgt nach der Erfindung eine Vermessung entlang der Messpunkte mit Hilfe üblicher Messwerkzeuge. Mit der Vermessung lässt sich die Lage, Höhe und Abmessungen der unterirdischen Bauwerke und die Richtung des Vortriebs bestimmen. Dabei können auch zwei oder mehr, zum Beispiel drei Zieleinrichtungen an der Vortriebsmaschine zum Einsatz kommen, so dass die Lage, Höhe und Vortriebsrichtung der Vortriebsmaschine eindeutig bestimmt werden kann. Zieleinrichtungen können zum Beispiel die bekannten Zieltafeln sein.

Für die Feststellung der Solllage und Sollhöhe des Bauwerks, der Rohrsohle, des Tunnels usw. kann auch das Einmessen der schon vor der Vortriebsmaschine eingebrachten Bauelemente ausreichen. Dabei kann es sich um die ersten bzw. letzten Einbauelement/Rohre handeln. Üblicherweise reichen mehrere Einbauelemente/Rohre an einem Ende für das Einmessen aus.

Wahlweise können nach der Erfindung kontinuierlich oder diskontinuierliche Messungen vorgenommen werden.
Es können auch gleichzeitig oder nacheinander(nachlaufend) verschiedene Messungen vorgenommen werden. Die unterschiedlichen Messungen können sich ganz oder teilweise auf andere Messpunkte stützen. Das dient der Kontrolle der Messungen. Wenn unterschiedliche Messungen zum gleichen Ergebnis führen, so ist die Sicherheit sehr gross, dass die Messung richtig bzw. genau war.
Eine mögliche Kontrollmessung ist nach der Erfindung auch die Rückwärtsmessung, bei der nach Vervollständigung eines Bauwerks eine Nachvermessung dadurch stattfindet, dass von dem Fertigzustand der Baumassnahme zum Ausgangspunkt der Baumassnahme gemessen wird.

Die Messstrahlen sind gerade.
Zugleich erlauben zeitgemässe Messgeräte eine Vermessung über erhebliche Entfernung, so dass in gerade verlaufenden Bauwerken zur Verlängerung der Messstrecke auch ein immer grösser werdender Abstand zwischen den Messgeräten in Betracht kommt bzw. der Vermessung nicht entgegensteht.

Etwas anderes ergibt sich bei kurvenförmig/gekrümmt verlaufenden Bauwerken. Dort muss der Abstand der Messgeräte so reduziert werden, dass die Messgeräte einander im Bauwerk noch anvisieren können. In den kurvenförmig/gekrümmt verlaufenden Bauwerken ergeben sich winkelig/abgeknickt verlaufende Messstrecken.

Die beschriebenen Prismen können vorteilhafterweise auch zur Längsrichtung des Bauwerkes in Gruppen zu zweit bzw. zu mehreren nebeneinander angeordnet werden. Wenn danach alle Prismen anvisiert werden, so ergeben sich verschiedene Messstellungen für die Messgeräte, so dass im Anschluss an eine Vermessung in einer Messstellung noch weitere Vermessungen in demselben Bauwerksabschnitt durchgeführt werden können und Messstrecken entstehen, die parallel zu der ersten Messstrecke verlaufen.
Von Vorteil kann sein, wenn die Messstrecken hin- und bergehend/zick-zackförmig abgewinkelt und/oder einander kreuzend verlaufen. Das Hin- und Hergehende und das Kreuzende beschränkt sich dann auf den Hohlraum des Bauwerkes. Soweit im Weiteren von parallelen Messstrecken gesprochen wird, schliesst das ein, dass einzelne oder mehrere Messstrecken oder alle Messstrecken hin- und hergehend im Bauwerk verlaufen und/oder einander kreuzend im Bauwerk verlaufen.

Durch parallel verlaufende Messstrecken eröffnet sich über die damit verbundene Kontrolle eine hohe Sicherheit für eine richtige/genaue Messung.

Vorzugsweise werden bei einfach(ohne Parallelvermessung) hergestellten Messstrecken im Wechsel Tachymeter und Prismengeräte eingesetzt.
Wahlweise sind Tachymeter gleichzeitig als Prismengeräte ausgebildet oder mit Prismengeräten kombiniert. Die kombinierten Tachymeter und Prismengeräte eignen sich besonders für die Erstellung paralleler Messstrecken.

Soweit mehrere Prismengeräte vorgesehen sind, ist es von Vorteil, die Prismen zu codieren.

Zur Positionsbestimmung können Horizontalwinkel, Vertikalwinkel und Entfernung gemessen werden. Diese Aufgaben können mit Einzelgeräten aber auch mit Kombinationsgeräten erfüllt werden.
Vorzugsweise finden Fahrzeuge Verwendung, mit denen die Messgeräte von Messstelle zu Messstelle gefahren werden.
Im Unterschied zu anderen Messverfahren ergibt sich mit der erfindungsgemässen Fahrzeugnutzung bei der Messung eine wesentlich kürzere Messzeit.

Von Vorteil ist auch, wenn die Tachymeter heb- und senkbar in den Fahrzeugen angeordnet sind.
Unter anderem eröffnet sich dadurch die Möglichkeit, die zwischen zwei Gruppen von Prismen angeordneten Tachymeter auf die Höhe der Prismen zu heben, desgleichen die Möglichkeit zu einer Parallelmessung durch Verschieben des Tachymeters in eine andere Hubstellung.

Dabei können verschiedene Hubvorrichtungen eingesetzt werden. Dazu gehören auch Einrichtungen, wie sie von Hubwagen oder von Gabelstaplern oder von Lädebordwänden an Lkws bekannt sind. Die Ladebordwand beinhaltet eine Plattform, die geeignet ist, jedes herkömmliche Stativ oder auch andere Stative aufzunehmen, an denen ein Tachymeter befestigt werden kann.

Wie oben ausgeführt ist zwischen der Einmessung beim Vortrieb und der Nachmessung/Kontrollmessung zu unterscheiden. Beides kann mit den gleichen Vorrichtungen erfolgen. Die Kontrollmessung kann durch die beschriebene parallele Vermessung oder durch eine Rückwärtsmessung erfolgen.

Die Messergebnisse werden vorzugsweise mit einem Rechner gesammelt und ausgewertet. Die Messergebnisse können sich auf einzelne Stellen des Bauwerkes beschränken oder die Bauwerke vollständig abbilden.

Vorteilhafterweise wird eine Nachvermessung nach der Erfindung einfacher.
Es können dabei einzelne Werte nachgemessen werden.
Bei der Nachvermessung kann auch eine Neuvermessung des Bauwerkes erfolgen. Aufgrund der Rechnerkapazität zeitgemässer Rechner ist eine vollständige Neuvermessung ein ohne weiteres tragbarer Aufwand.

Oder es findet eine teilweise Neuvermessung statt. Dabei kann die Vermessung ganz oder teilweise auf vorhergehenden Messungen aufbauen.

Das gleiche kann gelten, wenn der Vortrieb unterbrochen wird. Dann kann die Vermessung wieder von vom beginnen oder sich auf dem letzten Messpunkt aufbauen.
Gegebenenfalls kann die teilweise Vermessung einschliessen, dass wenige Zwischen-Messpunkte genutzt werden.

Wahlweise kann die erfindungsgemässe Messung auch genutzt werden, um im Vorlauf mit dem Vortrieb ein Einmessen vorzunehmen und im Rücklauf ein Nachmessen vorzunehmen. Wenn sich beim Nachmessen keine substantielle Abweichung der Messwerte gegenüber den Messwerten beim Vorlauf ergibt, so kann das eine Bestätigung der Richtigkeit des Einmessens sein. Andererseits wird mit wesentlichen Abweichungen der Vorlauf-Messwerte von den Rücklauf-Messwerten sofort ein Fehler des Bauwerkes deutlich. Für die Beteiligten ist das von grosser Bedeutung.

Der oben vorgeschlagene Wagen/Fahrzeug zum Transport des Tachymeters besitzt vorzugsweise einen elektrischen, batteriebetriebenen Antrieb, so dass keine Verbrennungsgase aus dem Betrieb des Wagens anfallen. Der Wagen kann auch mit herkömmlichen Motoren betrieben werden, wenn die Verbrennungsgase mittels Absaugvorrichtung im Bauwerksbereich entfernt werden bzw. wenn das Bauwerk entsprechend belüftet wird.

Wahlweise ist der Wagen mit lenkbaren Rädern versehen. Das erleichtert Abladen/Aufladen des Fahrzeuges nach Lkw-Transport bzw. zum Lkw-Transport und das Einfahren in den Kanal. Im Kanal kann ein lenkbares Fahrzeug Einbauten bzw. herumliegendem Material ausweichen. Nach der Erfindung erfolgt die Lenkung automatisch. Automatisch gelenkte und gesteuerte Wagen/Fahrzeuge besitzen eine Sensorik. Dabei ist zwischen Messfehlern, die auf Berührung reagieren, und zwischen berührungslos arbeitenden Messfühlern zu unterscheiden. Solche Fahrzeuge sind in diversen Formen einschließlich der Sensorik zum Umfahren von Hindernissen handelsüblich; desgleichen mit der Möglichkeit zur Rückwärtsfahrt. Außerdem kann die Fahrzeuglenkung mit dem oben beschriebenen Rechner kombiniert werden.
Überdies können die erfindungsgemäßen Fahrzeuge mit Kameras, insbesondere mit Übertragungsgeräten und Aufzeichnungsgeräten versehen werden. Auch das erleichtert die Kontrolle der Vermessung:

Wahlweise findet anstelle des lenkbaren Fahrzeuges ein gleisgebundenes Fahrzeug Anwendung.
Wahlweise ist das Fahrzeug als gleisfreies Fahrzeug dreirädrig ausgelegt.
Dreirädrige Fahrzeuge haben besonders kleine Wendekreise, d.h. sind besonders beweglich.

Jedes Fahrzeug kann mit Spezialrädern und/oder Spezialreifen und/oder einer Spezialradaufhängung versehen sein, welche der Bauwerkssohle besonders angepaßt sind. Darüber hinaus können die Fahrzeuge mit einer Kippsicherung ausgerüstet werden.
Die Kippsicherung kann elektronischer und/oder mechanischer Art sein. Einfache mechanische Kippsicherungen werden durch Stützen gebildet, mit denen sich die Fahrzeuge bei einer Neigung an der Bauwerkswand abstützen.

Günstig sind auch Ösen an dem Fahrzeugrahmen, um das Fahrzeug in den Pressschacht und wieder zurück zu heben. Die Ösen dienen dem Anschlagen eines Hubgeschirres.

Die Bauhöhe des Fahrzeuges kann so reduziert werden, daß Kanäle mit einem lichten Duchmesser von 1m ohne weiteres mit den Fahrzeugen befahren werden können.

In den Zeichnungen sind verschiedene Ausführungsbeispiele dargestellt.

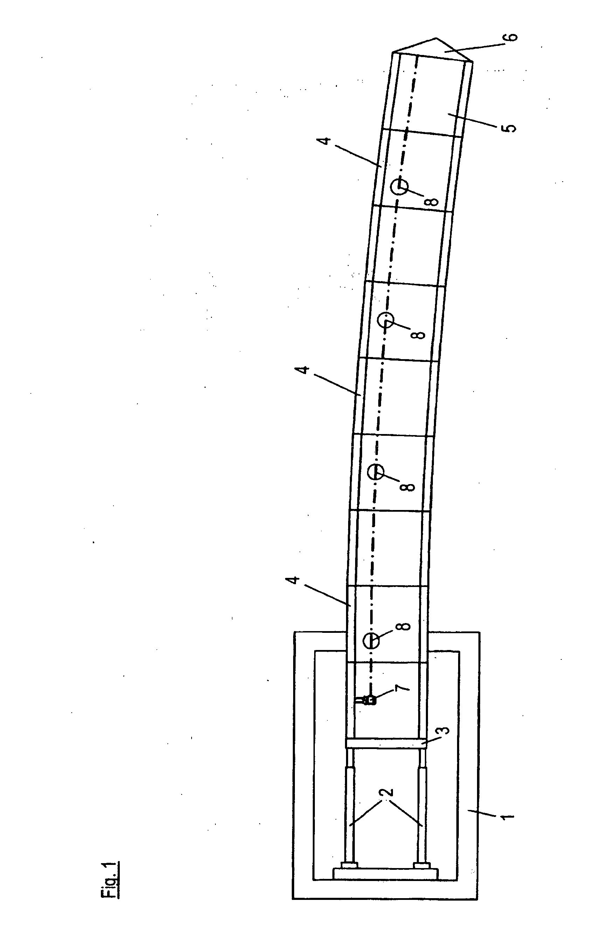

Fig. 1 zeigt einen Pressvortrieb für unterirdisch zu verlegende Kanalrohre. Zu dem Pressvortrieb gehören:
ein Pressschacht 1
eine darin angeordnete hydraulische Presse 2
ein Druckring 3
diverse Rohrstücke 4
ein Vortriebsschild 6
Die verschiedenen Rohrstücke 4 bilden im Ausführungsbeispiel ein Kanalstück
Die Krümmung entsteht durch entsprechende Steuerung des Vortriebsschildes 6.
Zur Steuerung ist eine Laserstrahlsteuerung vorgesehen.
Dabei ist ein Laserstrahler 7 vorgesehen.
Der Laserstrahler 7 wird an einem Anfangs-Messpunkt im Pressschacht zu Beginn des Bauvorhabens eingesetzt, um den aus dem Pressschacht austretenden Schild 6 richtig zu lenken.
Aufgrund der grossen Länge des vorgesehenen Kanals wird der Pressvortrieb im Ausführungsbeispiel durch eine als Fräse ausgebildete Vortriebsmaschine 5 unterstützt.

Im Ausführungsbeispiel ist der Vortriebsschild gegenüber der Vortriebsmaschine gelenkig angeordnet und mit mehreren Hydraulikzylindern gehalten. Diese Zylinder werden bei rotierendem Vortriebsschild mit rotierenden Fräsern solange betätigt, bis der Vortriebsschild 6 und die Vortriebsmaschine die richtige Richtung eingenommen haben.
Sobald der Pressenhub ausreicht, um ein Rohrstück 4 zwischen der Vortriebsmaschine 5 und der Presse einsetzen zu können, erfolgt das und setzt sich der Pressvorgang fort. Dabei wird zu einem passenden Zeitpunkt erneut gemessen, ob die Vortriebsmaschine von der Plan-Linie abweicht.
Dabei ist im Ausführungsbeispiel die Krümmung so gering, dass die Vortriebsmaschine unmittelbar mit dem Laser anvisiert werden kann. Nachdem weitere Rohrstücke 4 eingesetzt und verpresst worden sind und der Abstand zu der Vortriebsmaschine so gross geworden ist, dass die Messgenauigkeit leidet, wird ein Messpunkt 8 in einem der Rohre 4 eingerichtet bzw. wahrgenommen. Von dem Messpunkt 8 aus wird die Vortriebsmaschine dann erneut anvisiert und entsprechend dem Laserstrahl ausgerichtet.
Das wiederholt sich mit weiteren eingezeichneten Messpunkten 8.

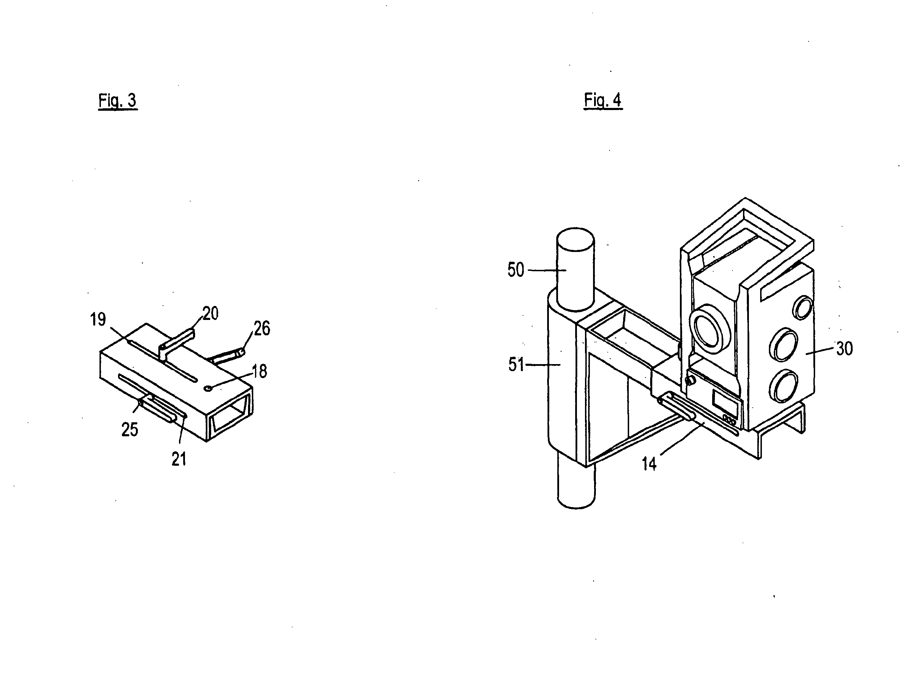

Fig. 4 zeigt eine Messvorrichtung für eine erfindungsgemässe Messung mittels Fahrzeug. Dabei trägt das Fahrzeug eine Positionierungsmechanik, in Messfunktion mit einem handelsüblichen Tachymeter als Messgerät. Im Ausführungsbeispiel handelt es sich um ein Gerät mit der Produktbezeichnung Trimble. Das Messgerät 30 ist aus zeichnerischen Gründen um 90Grad versetzt dargestellt. In Wirklichkeit ist im Ausführungsbeispiel vorgesehen, dass die Optik des Messgerätes in Längsrichtung der Positionierungsmechanik 14 gerichtet ist und von der Positionierungsmechanik weg in Richtung einer Vorausfahrt des Fahrzeuges weist.

Mit der Bauart Trimble lassen sich passive Ziele mit einer aktiven Ziel-Identifikation verfolgen. Das Instrument erfasst und verfolgt zahlreiche konventionelle Prismen und Ziele auch auf grosse Entfernung.
Die Ziel-Identifikation sichert das Anvisieren des richtigen Zieles. Dadurch können auch mehrere Prismen im Messgebiet bzw. am Messpunkt zum Einsatz kommen.

Das Gerät besitzt über Servomotoren und Winkelsensoren, ferner eine Fehlerkompensation.
Das Gerät besitzt einen internen Rechner für die vorstehend beschriebenen Aufgaben, ausserdem eine eigene Stromversorgung und eine drahtlose Fernübertragung von Daten. Dies kann für die Fernsteuerung des Tachymeters genutzt werden.

Im Übrigen ist das Tachymeter mittels eines Dreifusses auf der Positionierungsmechanik aufgestellt, der das Messgerät in eine lotrechte Stellung steuern kann. Ein geeigneter Dreifuss ist zum Beispiel der Automatik-Dreifuss AD-12 von GEO Laser. Dieser Dreifuss ist kombiniert mit einem Laser, welcher durch Verbindung mit Gehäuse des Messgerätes bei dessen vertikaler Ausrichtung gleichfalls vertikal steht. Im Ausführungsbeispiel wird die Positionierungsmechanik durch einen externen Rechner solange verstellt, bis der Laser genau auf ein entferntes, im First angeklebtes Prisma zeigt.

In der Messstellung nach Fig. 4 steht die Positionierungsmechanik 14 mit der Stange 50 auf der Bauwerkssohle und stützt sich das Fahrzeug über zwei weitere nicht dargestellte, ausgefahrene und beabstandete Stützen an der Baüwerkssohle ab. Die Stützen liefern eine stabile Lage für das Fahrzeug. Im Ausführungsbeispiel werden die Stützen und die Stange 50 gleichfalls von dem externen Rechner bewegt und in der Stützstellung durch Klemmung arretiert. Dabei wirkt die Steuerung auf nicht dargestellte Antriebe.

Desgleichen ist eine Arretierung der Positionierungsmechanik in der Messstellung vorgesehen Dabei werden Hebel 20,25 und 26 und zugehörige Arretierungs- und Klemmschrauben verspannt. Die Klemmung und Arretierung wird gleichfalls von dem externen Rechner gesteuert. Auch in dem Anwendungsfall wirkt die Steuerung auf nicht dargestellte Antriebe.

Die Fig. 3 zeigt die Positionierungsmechanik 14 in zusammengeschobenem Zustand. Die Positionierungsmechanik 14 wird nach der Beendigung des Messvorganges zusammengeschoben,
um das Fahrzeug manövrierfähiger zu machen. Für die Bewegung der Positionierungsmechanik sind gleichfalls, nicht dargestellte Antriebe vorgesehen, die von dem externen Rechner gesteuert werden.

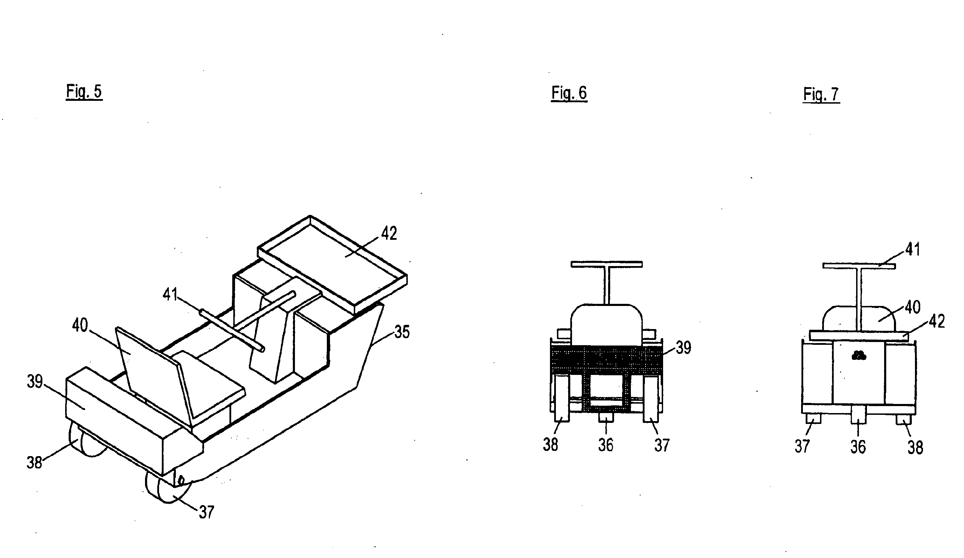

Die Fig. 5 bis 7 zeigen ein erfindungsgemässes Fahrzeug mit mehr Details.

Das Fahrzeug ist dreirädrig, mit zwei Hinterrädern 37,38 und einem Vorderrad 36. Die Hinterräder 37,38 sind mit einem Elektroantrieb versehen.
In einem anderen Ausführungsbeispiel ist ein vierrädriges Fahrzeug vorgesehen.

Die Antriebsbewegung ist geregelt, im Ausführungsbeispiel sind Geschwindigkeiten von von 0 bis 10km pro Stunde möglich.
Der elektrische Antrieb wird von einer Batterie gespeist, die in einem Batteriekasten 39 angeordnet ist.
Der Batteriekasten 39 ist mit dem Fahrzeugrahmen 35 verbunden.
Vorn befindet sich an dem Fahrzeugrahmen 35 eine Tragfläche 42.

Ferner gehört zu dem Fahrzeug eine Lenkstange 41 als Lenkung. Die dient der händischen Lenkung des Fahrzeuges, wenn die automatische Lenkung ausgefallen ist oder ausgeschaltet ist. Die Lenkstange 41 ist drehbeweglich in dem Fahrzeugrahmen 35 gehalten und mündet in eine Gabel, in der das Rad 36 gehalten ist.
Nach Fig. 4 gehören zu der beschriebenen Positionierungsmechanik eine Führungsstange 50 eine Führung 51 und eine nicht dargestellte Befestigung an der Tragfläche 42 des Fahrzeugs.

Die Führungsstange 50 verläuft im dargestellten Ausführungsbeispiel entsprechend der Stellung des Fahrzeuges vertikal und ist an beiden Enden an der Tragfläche 42 des Fahrzeugs befestigt.
Die Führungsstange ist im dargestellten Ausführungsbeispiel einteilig, in anderen Ausführungsbeispielen ist die Stange teleskopierbar, um die Stange auf die Kanalsohle aufstossen zu lassen.
Zwischen beiden Stangenenden kann die Führung 51 im Ausführungsbeispiel zur Einstellung des Messgerätes 30 auf und ab bewegt werden. Dazu ist ein nicht dargestellter Antrieb vorgesehen, der von dem externen Rechner gesteuert wird. Ferner ist die Führung 51 auf der Stange schwenkbar, so dass auch durch Verschwenken eine Einstellung vorgenommen werden kann. Für den Schwenkvorgang ist gleichfalls ein nicht dargestellter Schwenkantrieb vorgesehen, der von dem externen Rechner gesteuert wird.

Die weitere Einstellung der Positionierungsmechanik in Tunnellängsrichtung erfolgt durch Einschieben und/oder Ausziehen der Positionierungsmechanik 14.

Nach jeder Einstellung erfolgt eine Arretierung der Positionierungsmechanik.

Wahlweise sind die verschiedenen Antriebe als Hydraulikzylinder ausgebildet. Solche Antriebe sind ventilgesteuert. Durch Betätigung der Ventile wird zugleich eine Arretierung der Hydraulikzylinder bewirkt. Sämtliche Zylinder können in einem Fahrzeug über einen gemeinsamen Hydraulikkreis versorgt werden.
Im Ausführungsbeispiel sind für eine Messung drei Fahrzeuge im Einsatz.

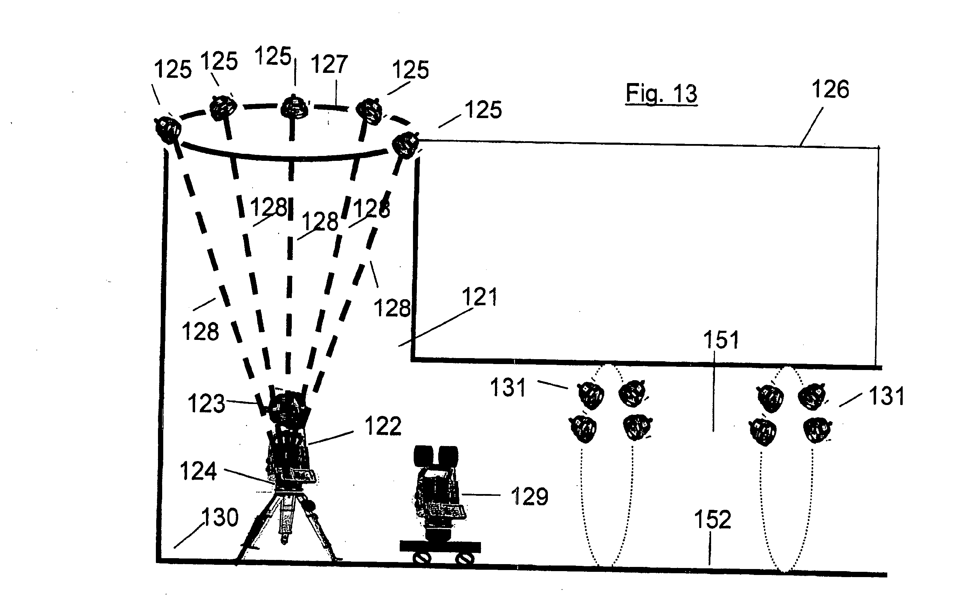

Fig. 13 zeigt schematisch den Beginn eines Rohrvortriebes. Dabei ist zunächst ein Schacht 121 abgetäuft worden. Der Schacht wird dabei einschließlich der Schachtsohle mittels eines Tachymeters 122 in Kombination mit einem Messprisma 123 eingemessen. Im Ausführungsbeispiel hat das Tachymeter einen Dreifuß 124 zur automatischen Horizontierung
Der Automatik-Dreifuss 124 ist ein handelsübliches Gerät mit der Bezeichnung AD-12. Diese Messeinrichtungen sind nur für die im Schacht durchzuführende Messung auf einem handelsüblichen Stativ aufgesetzt, in anderen Ausführungsbeispielen auf einer Konsole an der Schachtwandung.
Zur Einmessung werden zugleich Messpunkte an der Erdoberfläche 126 oder dem Baugrubenrand 127 genutzt. Die Messpunkte werden durch Prismen 125 gebildet, die mit dem Tachymeter anvisiert werden. Die Messstrahlen des Tachymeters 122 sind gestrichelt dargestellt und mit 128 bezeichnet.

Die Fig. 13 zeigt den Schacht mit fertig gestellter Schachtsohle 130 und mit einem auf die Schachtsohle abgesetzten Messwagen 129. Der Messwagen 129 ist mit folgenden Messeinrichtungen besetzt: automatischer Dreifuß 124, Tachymeter 122 und Prismen 123.
Im Ausführungsbeispiel sind neben dem einen Messwagen 129 noch zwei weitere gleiche Messwagen vorgesehen.

Das Messkonzept sieht zudem vor, an ausgewiesenen Stellen Prismenkränze 131 mit jeweils vier Prismen in der Firste der Kanalrohre zu montieren. Die Befestigung wird im Ausführungsbeispiel durch lösbare Klebestreifen bewirkt. Dadurch entfällt eine für das Bauwerk nicht hinnehmbare Beschädigung durch Bohrungen bzw. Dübel. Die Positionen der vier Messprismen ergeben sich aus dem Rohrverlegeplan.
Die Messwagen sind mit einer nicht dargestellten Abstandssensorik und mit einer Schrittschaltsteuerung versehen, so daß sowohl die Position im Bauwerk planmäßig eingenommen werden kann als auch unvorhergesehene Hindernisse im Bauwerk erkannt werden können.

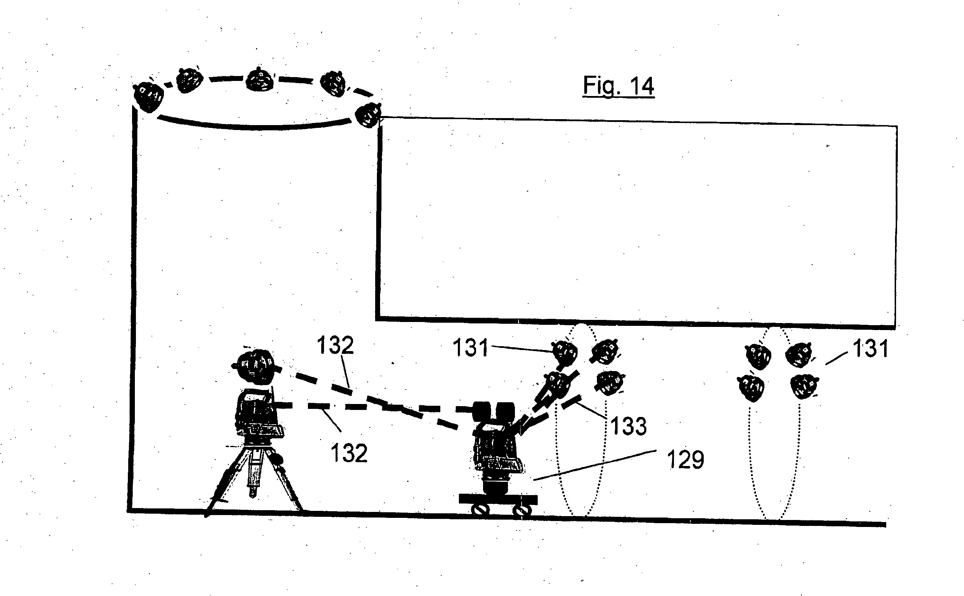

Nach Fig. 14 ist der Messwagen 129 unter den ersten Prismenkranz 131 gesteuert worden. Die Fahrstrecke ergibt sich aus der geplanten Position in dem Rohrverlegeplan für den Kanal. Der Messwagen ist im Ausführungsbeispiel unmittelbar unter den Prismenkranz 131 gefahren worden, weil der verwendete Tachymeter einen Abstand von den Prismen hat, der eine ausreichende Meßgenauigkeit des Tachymeters bei der Vermessung der Prismen in dem Prismenkranz erlaubt. Der Abstand ergibt sich aus der lichten Höhe in dem Kanal. In anderen Ausführungsbeispielen ergibt sich aufgrund zu geringer lichter Höhe des Kanals und/oder aufgrund größerer Mindestabstände der verwendeten Tachymeter eine andere Messstellung für die Messwagen, die dann zwischen den Prismenkränzen liegt. Soweit nicht klar ist, welchen Mindestabstand die verwendeten Tachymeter einhalten müssen, wird von einem Mindestabstand von 1,5m ausgegangen.
Das Tachymeter auf dem Stativ im Schacht misst zu dem Prisma auf dem Messwagen. Umgekehrt misst das Tachymeter auf dem Messwagen das Prisma ein, welches zusammen mit dem einen Tachymeter im Schacht angeordnet ist. Dargestellt ist dieser Vorgang durch die Messstrahlen 132 in Fig. 14. Anschließend werden die an der Rohrinnenwand befindlichen Prismen 131 mittels der Messstrahlen 133 vermessen.

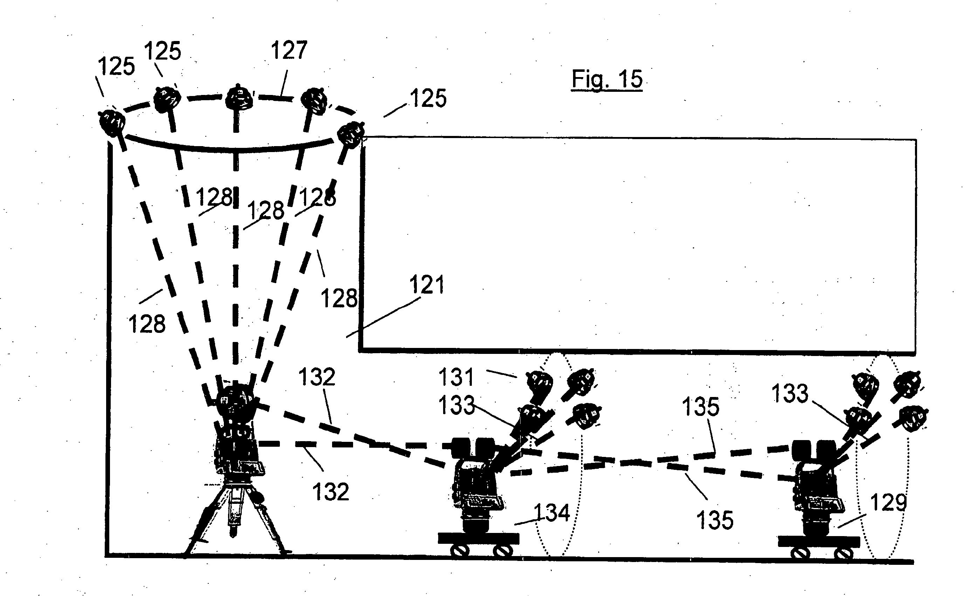

Fig. 15 zeigt, dass ein zweiter Messwagen 134 in den Kanal eingefahren wurde. Der Messwagen 129 ist zum nächsten Prismenkranz gefahren worden. Danach wiederholt sich die Messung im Schacht 121. Wieder werden die Prismen 125 am Baugrubenrand 127 durch die Messstrahlen 128 eingemessen. Das Prisma des zweiten Messwagens 134 wird vom Tachymeter im Schacht angemessen. Umgekehr misst das Tachymeter auf dem zweiten Messwagen 34 das Tachymeter auf dem Stativ im Schacht an. Das geschieht genauso wie bei der ersten Messung mit dem ersten Messwagen 129. Die Messstrahlen sind auch hier mit 132 bezeichnet. Damit ist der erste Prismenkranz zwei Mal eingemessen worden.

Sodann misst das Tachymeter des zweiten Messwagens 134 die Prismen 131 mit Messsstrahlen 133 und führt eine Messung 135 zum Prisma des Messwagens 129 durch. Das Tachymeter 129 sendet wiederum einen Messstrahl 135 zum Prisma auf dem Messwagen 134. Anschließend werden von dem Tachymeter 129 die sich über dem Tachymeter 129 befindlichen Prismen 131 mit den Messstrahlen 133 erstmalig bestimmt.

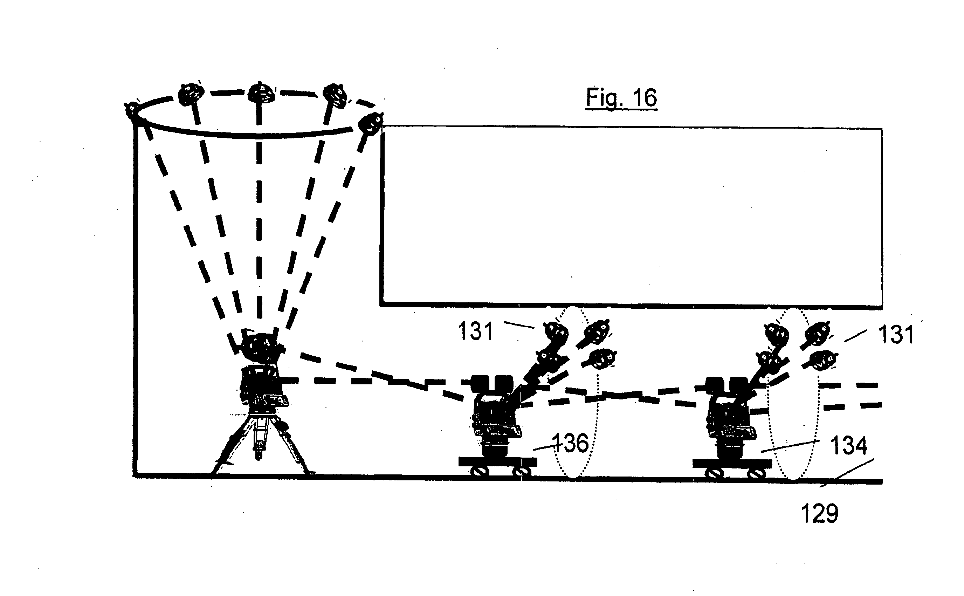

In Fig. 16 ist dargestellt, wie ein dritter Messwagen 136 in den Kanal gefahren worden ist. Wie schon zwei Mal zuvor beginnt die Vermessung mit dem Anvisieren der Prismen 125. Der Messwagen 136 wird danach wie der Messwagen 134 und der Messwagen 129auch vom. Tachymeter im Schachte eingemessen. Der Messwagen 136 misst auch wieder die über ihm angeordneten Prismen 131 im Kanal.

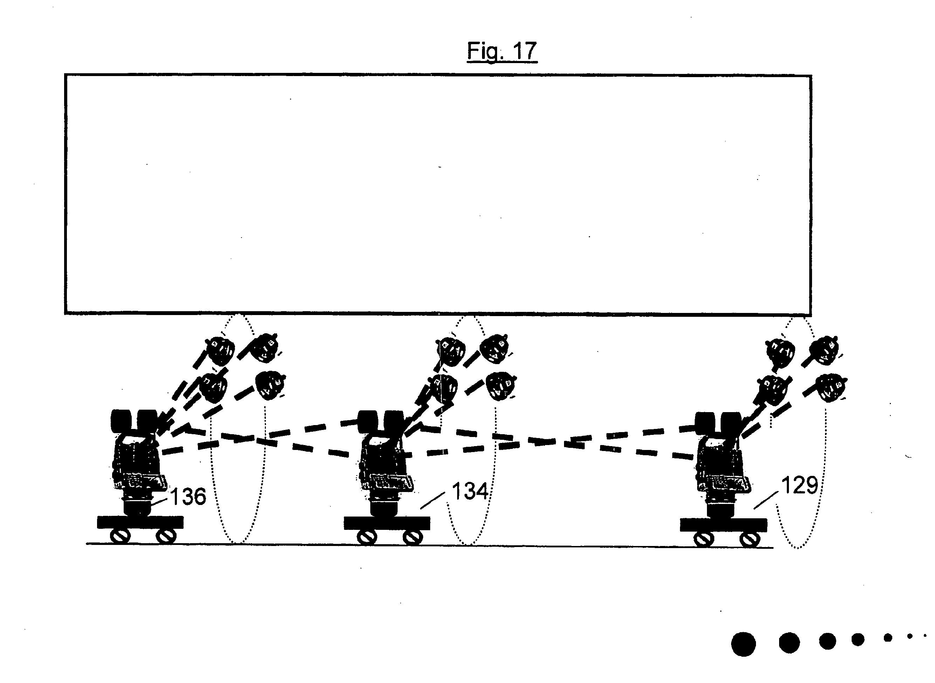

In den weiteren Vermessungsschritten werden die Messwagen gemeinsam um einen oder mehrere Messkränze vorgefahren. Vorzugsweise findet ein Vorfahren um einen Messkranz statt. In den weiteren Vermessungsschritten messen sich die Messeinrichtungen der drei Messwagen immer gegenseitig an. Ferner werden in jedem Vermessungsschritt die über den Messwagen im Kanal angeordneten Prismen vermessen bzw. in den Vermessungsvorgang einbezogen. Alle Prismen der Prismenkränze werden bei Vermessungsschritten, die immer nur um einen Prismenkranz vorangehen, im Ausführungsbeispiel drei Mal messtechnisch erfasst. Fig. 17 zeigt die gegenseitige Vermessung der Messeinrichtungen auf den Messwagen.

Sobald der erste Messwagen 129 an der Vortriebsmaschine angekommen ist, erfolgt die Einmessung dieser mittels an ihr befestigter Messpunkte. Diese Messpunkte können durch Messfolien, Prismen oder Zielmarken oder dergleichen gebildet werden.

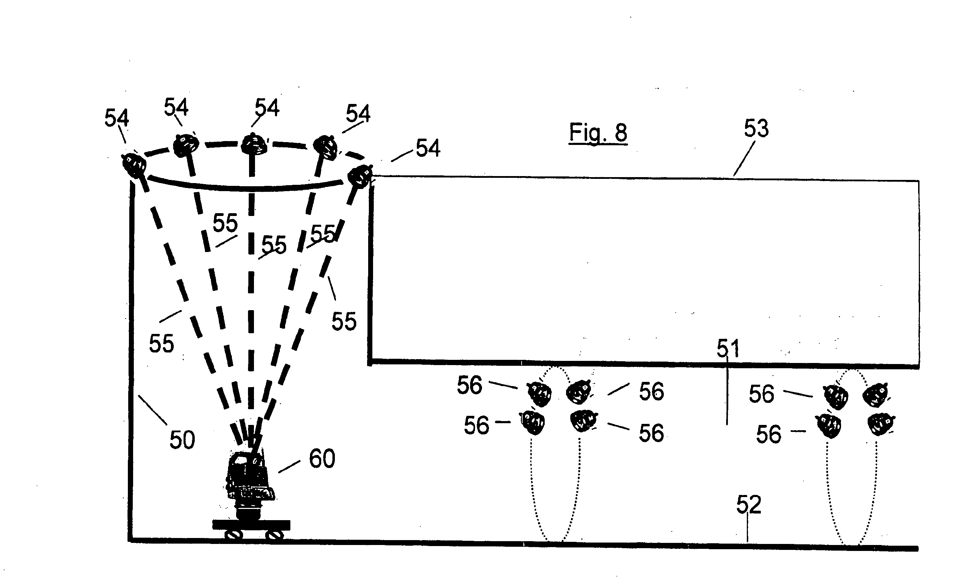

Fig. 8 zeigt in schematischer Ansicht den Beginn eines Rohrvortriebes unter Vermessung mit einem anderen Messwerkzeug..
Dabei ist zunächst ein Schacht 50 abgetäuft worden. Der Schacht wird dabei einschliesslich der Schachtsohle mittels eines Tachymeters 60 eingemessen. Das Tachymeter 60 ist auf einem Fahrzeug aufgesetzt. Das Fahrzeug ist schematisch dargestellt und besitzt die oben beschriebenen Merkmale.

Zur Einmessung werden zugleich Messpunkte 54 an der Erdoberfläche 53 genutzt. Bei den Messpunkten handelt es sich um Prismen. Die Messstrahlen des Tachymeters sind gestrichelt dargestellt und mit 55 bezeichnet. Die Prismen sind kodiert.

Soweit mehrere Prismengeräte vorgesehen sind, ist es von Vorteil, die Prismen zu kodieren.

Dazu können die Prismen mit einer Target-ID-Funktion versehen werden. Diese Funktion kann die gleiche sein wie bei der Zielsuche und Zielerkennung eines Trimble-Tachymeters. Die Target-ID sendet einen nicht sichtbaren Infrarotstrahl aus, auf den ein Code aufmoduliert ist. Dadurch erhält man eine eindeutige Identifizierungsmöglichkeit für diesen Zielstrahl und für das damit verbundene Ziel. Die Zahl der Codes ist in weiten Grenzen wählbar. Zum Beispiel können acht Codes wählbar sein. Entsprechend ist die Zahl der identifizierbaren Prismen. Wenn die Suche nach einem Prisma mit einem Tachymeter gestartet wird, so wird dann nach einem aktiven Zielstrahl gesucht, der einen bestimmten Code trägt. Empfängt der Sensor im Tachymeter ein solches Infrarotsignal, so decodiert er die aufmodulierten Information. Ist die empfangene Information mit der gesetzten Information identisch, so ist das richtige Ziel gefunden und erfolgt eine Scharfstellung auf das Prisma.
Differiert die aufmodulierte Information von der im Tachymeter gespeicherten Information oder ist keine Information aufmoduliert, so bleibt das Prisma bei der Suche unbeachtet. Auf diese Weise werden nur die richtigen/gewünschten Prismen von dem Tachymeter berücksichtigt.

Bei dem Tachymeter 60 handelt es sich um ein neueres Modell, das die verschiedenen Prismen anhand der Kodierung identifiziert. Zugleich ist das Tachymeter mit einer Zielerkennung und einer automatischen Zielsuche versehen. Infolgedessen muss das Tachymeter nur auf der Schachtsohle aufgestellt werden und in Gang gebracht werden, um selbsttätig die Prismen 54 zu vermessen. In der Praxis findet die Vermessung solange statt, bis die Schachtsohle die vorbestimmte Tiefe erreicht, in der eine Rohrpresse aufgestellt wird. Durch die gewählte Vielzahl von Prismen wird eine hohe Vermessungsgenauigkeit erreicht.

Mit der Rohrpresse werden dann eine Anzahl von Rohren - im Ausführungsbeispiel für einen Kanalabschnitt 51 - in das Erdreich gepresst. Dabei entsteht eine Kanalsohle 52. Die Rohre sind im Ausführungsbeispiel Stahlbetonrohre.

Die Rohre für den Kanalabschnitt 51 sind im Ausführungsbeispiel jeweils in vorgeplanten Abständen in der Firste mit vier Prismen 56 versehen. Die Prismen 56 in den Rohren dienen der Kanalvermessung. Durch die gewählte Vielzahl von vier Prismen je Gruppe, wird wiederum eine hohe Vermessungsgenaüigkeit erreicht.

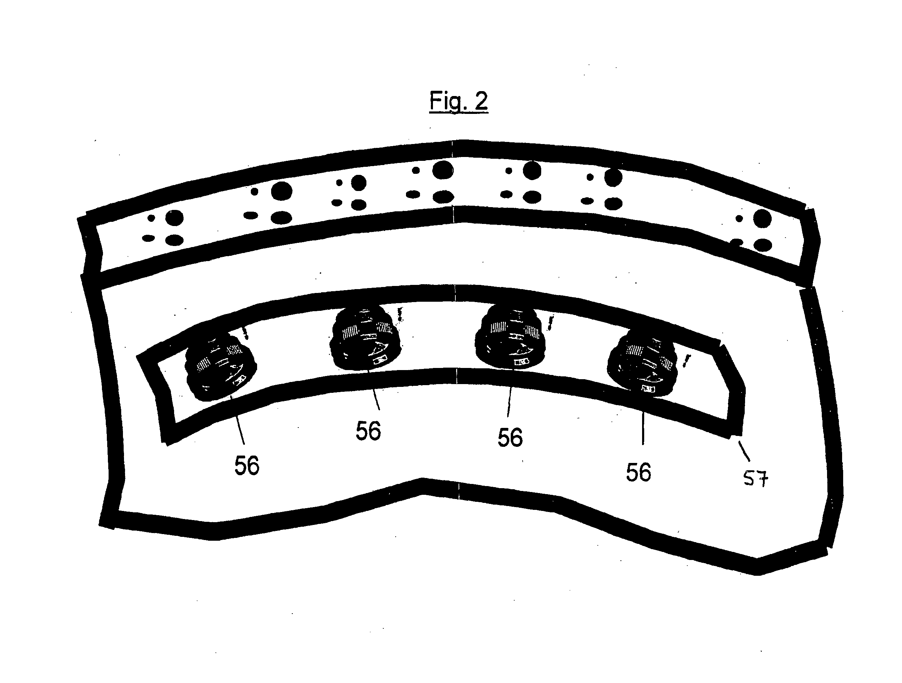

Die Prismen 56 sind rückseitig mit einem Permanentmagneten versehen, so dass die Prismen 56 nach Fig. 2 an einem Stahlblech haften, das mittels Polyurethankleber im Kanalrohr verklebt ist. Die gleiche Anordnung ist für alle Prismen im Kanalrohr vorgesehen. Das Stahlblech 57 hat eine Dicke von 0,3mm und ist weich. Es passt sich der Innenfläche des Kanalrohres leicht an und hat nur geringe Rückstellkräfte, so dass eine Verklebung im First leicht gemacht wird.
Die Darstellungen nach Fig. 2 und 8 sind unmassstäblich.

Das Kanalrohr ist im Ausführungsbeispiel an allen relevanten Stellen mit dem Stahlblech vorbereitet worden.
An dem Stahlblech 57 können die Prismen 56 mit ihren Magneten leicht angesetzt werden und wieder abgezogen werden.

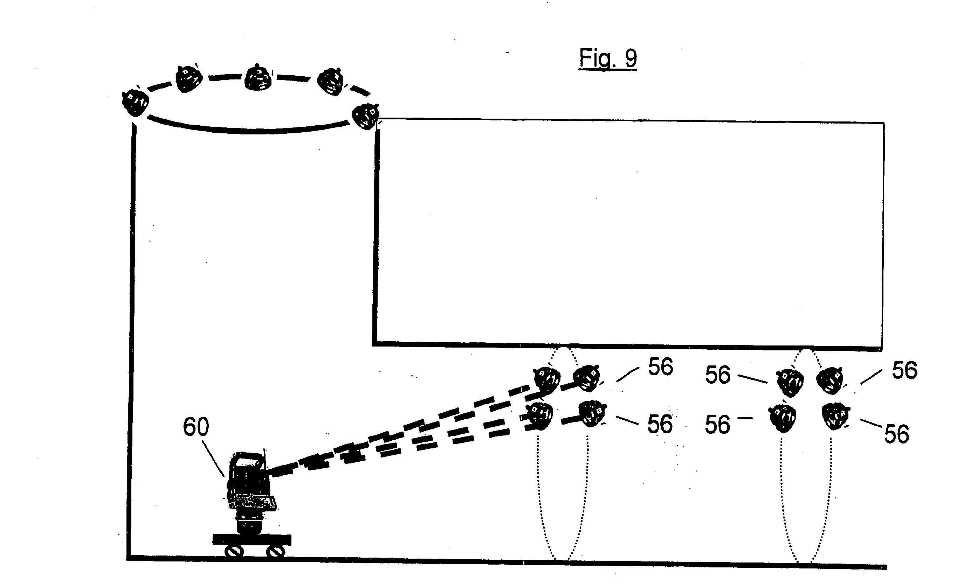

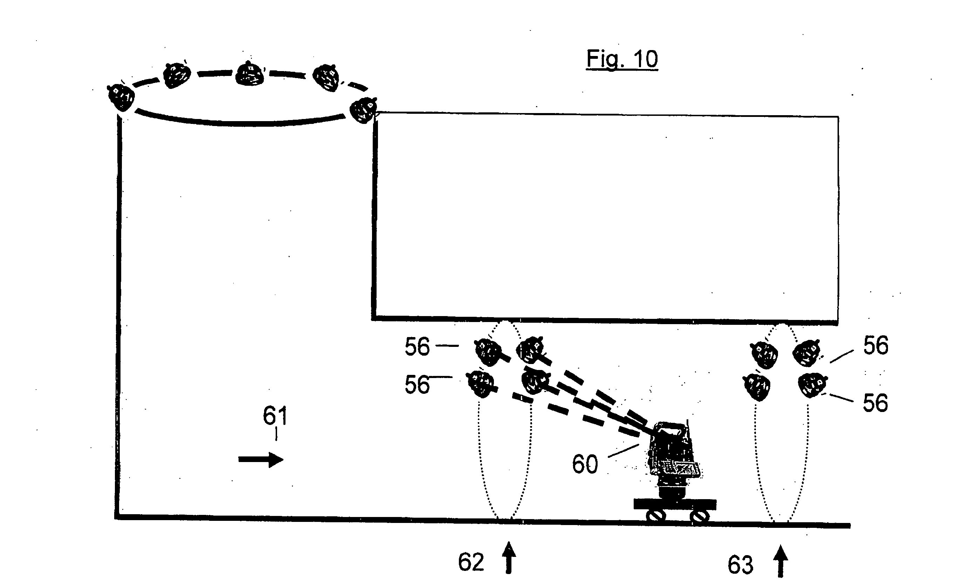

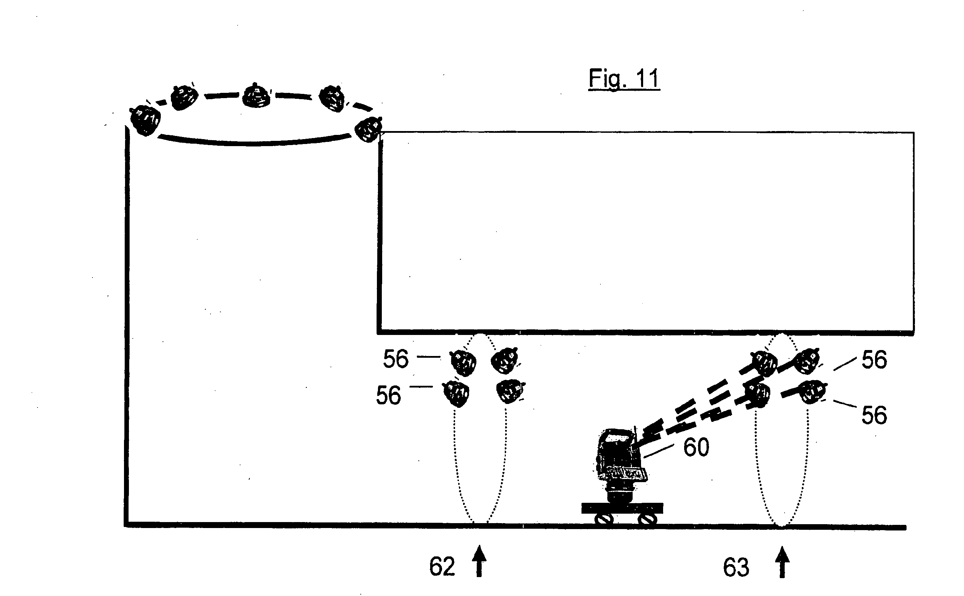

Fig. 9 zeigt, wie mit Hilfe des Tachymeters 60 aus der gemäss Fig. 8 vermessenen Position die Prismen 56 vermessen werden. Dies wird als erster Vermessungsschritt bezeichnet. In dem Vermessungsschritt sucht das Tachymeter 60 die Prismen 56 selbst und identifiziert das Tachymeter 60 die verschiedenen Prismen anhand ihrer Kodierung.

Für den nachfolgenden Vermessungsschritt wird das Fahrzeug mit dem Tachymeter 60 in Fahrtrichtung 61 zwischen die Gruppe 62 der vermessenen Prismen 56 und die nächste Gruppe 63 noch unvermessener Prismen 56 verfahren. Dort findet der nächste Vermessungsschritt statt, in dem der Tachymeter 60 die Prismen 56 erneut anstrahlt. Dabei bestimmt der Tachymeter aus den Messwerten der ersten Gruppe vermessener Prismen 62 die eigene neue Position. Der nachfolgende Vermessungsschritt definiert die Vermessungsrichtung, die identisch mit der Pfeilrichtung 61 ist.
In Pfeilrichtung 61 ist die Gruppe 62 die letzte/hintere Gruppe.
In Pfeilrichtung 61 ist die Gruppe 63 die vorderste Gruppe.

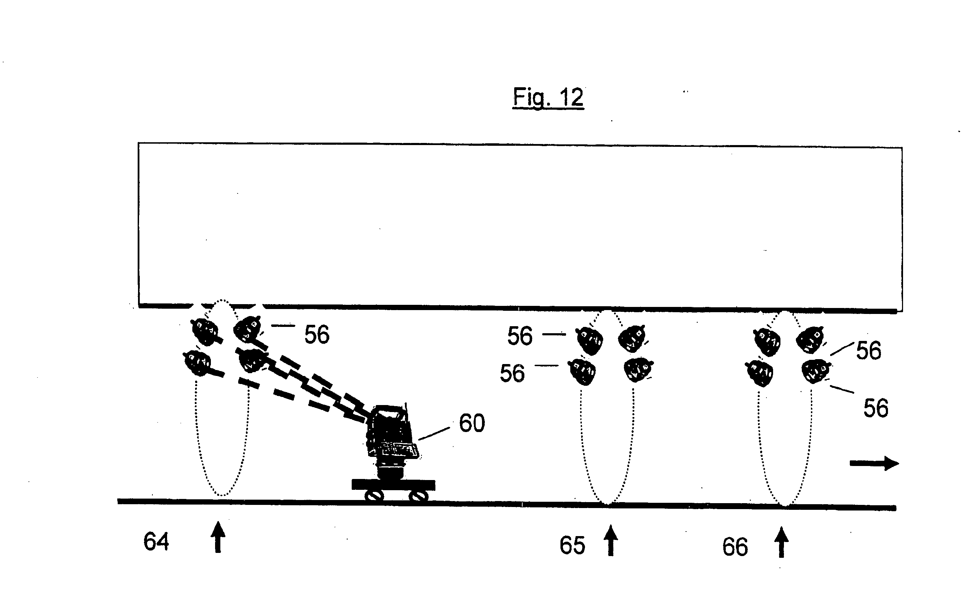

Im Fig. 12 sind für die fortschreitende Vermessung neben dem Tachymeter 60 noch drei Prismenkränze/Prismengruppen mit insgesamt zwölf Prismen 56 dargestellt. Neben den dargestellten drei Prismenkränzen ist der gesamte Kanal noch mit gleichen Prismenkränzen bestückt.
Die verschiedenen Gruppen sind in Fig. 12 mit 64,65,66 bezeichnet.
Wenn die verschiedenen Gruppen von Prismen vermessen worden sind, so wird anschliessend das Tachymeter 60 in Vermessungsrichtung vor die Gruppe 66 gesetzt und aus den Prismen der Gruppe 66 die Position des Tachymeters bestimmt. Danach setzt sich die Vermessung fort, bis die Vermessung des Kanals abgeschlossen ist.

Alle Prismen sind vor Beginn der Vermessung im Kanal montiert worden. Die Montage wird durch eingeklebte Stahlbleche 57 im Kanal gemäss Fig. 2 erleichtert. Die Prismen 56 sind mit Permanentmagneten versehen. Die Prismen 56 müssen nur an die Stahlbleche 57 gehalten werden. Dann werden die Prismen 56 von den Magneten gegen das Stahlblech gezogen und ist die Position der Prismen 56 bestimmt.

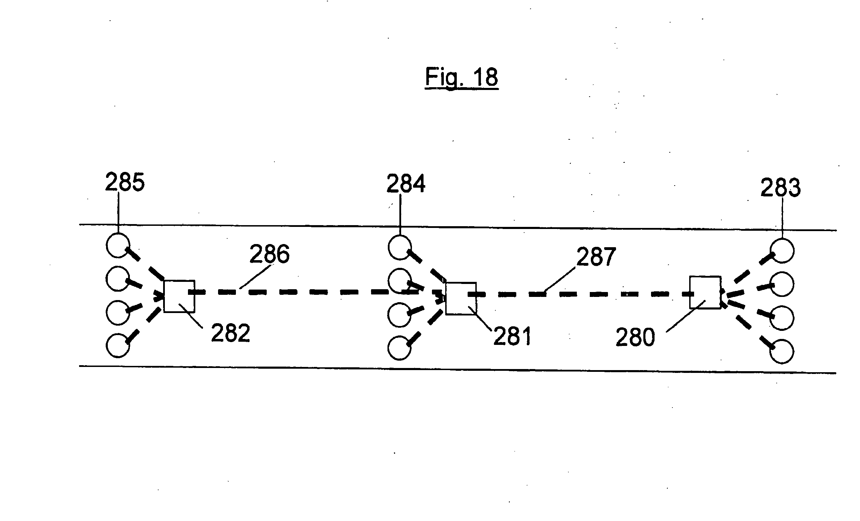

Fig. 18 zeigt einen Vermessungsvorgang mit drei Tachymetern 280, 281, 282 in einem Kanal. In der Kanalfirste finden sich in dargestellten Kanalausschnitt drei Prismenkränze 283, 284, 285. Jeder Prismenkranz besteht aus vier Prismen, die quer zur Kanallängsrichtung auf einer Linie angeordnet sind. In dem Ausführungsbeispiel ist die Position der Tachymeter vermessen. Die bei der gegenseitigen Vermessung der Tachymeter vorkommenden Messstrahlen sind mit 286 und 287 bezeichnet. Aus der eigenen gesicherten/bestimmten Position werden mit den Tachymetern die Positionen der Prismen einzeln bestimmt. Das heißt, jedes Prisma wird nur von einem Tachymeter vermessen.

In weiteren Ausführungsbeispielen werden mehrere oder alle Tachymeter genutzt, um die Position eines Prismas zu vermessen. Dabei können die Tachymeter in jeder Richtung tätig werden, wobei jedes Tachymeter oder mehrere Tachymeter zwischen zwei benachbarten Prismenkränzen auch mehrere Stellungen einnehmen können.

## Patentansprüche

1. Verfahren zur Nachvermessung von unterirdischen Bauwerken wie Tunnel, Kanäle, Bergwerksstrecken, Unterführungen,
wobei wahlweise ein Rohrvortrieb oder ein Tübbingausbau stattfindet,
wobei der Ausbau ortsfest entsteht oder mit dem Vortrieb durch den Untergrund bewegt wird,
wobei mehrere Prismen (56,131,283,284,285) in den unterirdischen Bauwerken vorgesehen sind und
wobei die Prismen (56,131,283,284,285) zu mehreren in Prismenkränzen (62,63,66) in der Bauwerksfirste angeordnet sind und
wobei die Prismen (56,131,283,284,285) der Prismenkränze (62,63,66) mit mindestens einem Tachymeter (60,122,280,281,282) vermessen werden,
wobei eine schrittweise Vermessung des Bauwerks mit den Prismen (56,131,283,284,285) und dem Tachymeter (60,122,280,281,282) stattfindet,
wobei bei jedem Vermessungsschritt
- die Prismen (56,131,283,284,285) von drei Prismenkränzen (62,63,66) vermessen werden, von denen zwei Prismenkränze (62,63,66) bereits in einem vorhergehenden Vermessungsschritt vermessen worden sind,so daß sich jeder neue Vermessungsschritt mit einem vorhergehenden Vermessungsschritt überlappt;
- der Tachymeter (60,122,280,281,282) in verschiedene Richtungen misst,
- der Tachymeter (60,122,280,281,282) nach einer Messung von der zugehörigen Messstellung in die nächste Messstellung transportiert wird und
die Messungen bei ruhendem Tachymeter (60,122,280,281,282) erfolgen;
wobei der Weg von einer Messstellung in die nächste Messstellung den Vermessungsschritt bestimmt.

2. Verfahren nach Anspruch 1, **dadurch gekennzeichnet, daß** die gesamte Messstrecke mannlos vermessen wird.

3. Verfahren nach Anspruch 1 oder 2, **dadurch gekennzeichnet, dass** zu einem Ziel hin schrittweise Messstrecken erzeugt werden, die sich über zwei oder mehr angebrachte Prismen (56,131,283,284,285) erstrecken und
wobei die verschiedenen Messschritte einander überlappen und
wobei die einzelnen sich überlappenden Messstrecken sich zu einer Gesamt-Messstrecke ergänzen.

4. Verfahren nach Anspruch 3, **gekennzeichnet durch** die Verwendung von Gruppen von Prismen (56,131,283,284,285) für die Vermessung auf parallelen Messstrecken, d.h. Meßstrecken, die hin- und hergehend oder einander Kreuzend im Bauwerk verlaufen.

5. Verfahren nach einem der Ansprüche 1 bis 4, **gekennzeichnet durch** eine Anbringung der Prismen (56,131,283,284,285) im Bauwerk im Bereich vorbestimmter Messstellen.

6. Verfahren nach Anspruch 5, **gekennzeichnet durch** eine Anbringung der Prismen (56,131,283,284,285) mittels Kleben.

7. Verfahren nach Anspruch 5, **gekennzeichnet durch** eine lösbare Befestigung der Prismen (56,131,283,284,285) mittels Magneten.

8. Verfahren nach Anspruch 7, **gekennzeichnet durch** Verwendung einer **durch** Magneten anziehbaren Halterung.

9. Verfahren nach Anspruch 8, **gekennzeichnet durch** die Verwendung von Stahlblechen als Halterung.

10. Verfahren nach Anspruch 8 oder 9, **gekennzeichnet durch** eine Verklebung der Halterung am Bauwerk.

11. Verfahren nach Anspruch 10, **gekennzeichnet durch** eine zumindest zeitweise bleibende Verklebung der Halterung.

12. Verfahren nach einem der Ansprüche 9 bis 11, **gekennzeichnet durch** die Verwendung von Stahlblechen mit einer Dicke von kleiner/gleich 0,5mm, vorzugsweise kleiner/gleich 0,4mm und noch weiter bevorzugt kleiner/gleich 0,3mm.

13. Verfahren nach einem der Ansprüche 9 bis 12, **gekennzeichnet durch** die Verwendung von Stahlblechen mit einer Breite von kleiner/gleich 0,3m, vorzugsweise von kleiner/gleich 0,2m und höchst bevorzugt von kleiner/gleich 0,1m

14. Verfahren nach einem der Ansprüche 10 bis 14, **gekennzeichnet durch** die Verwendung von Stahlblechen mit einer Länge kleiner/gleich 0,5m, vorzugsweise von kleiner/gleich 0,4m und höchst bevorzugt von 0,3m.

15. Verfahren nach einem der Ansprüche 9 bis 14, **gekennzeichnet durch** die Verlegung der Stahlbleche mit der Längsrichtung in Umfangsrichtung der Bauwerke.

16. Verfahren nach Anspruch 1 bis 15, **gekennzeichnet durch** die Verwendung von mehreren Prismen (56,131,283,284,285) in mindestens einem Prismenkranz an einer Vermessungsstelle.

17. Verfahren nach Anspruch 16, **gekennzeichnet durch** die Verwendung von mehreren Prismenkränzen (56,131,283,284,285).

18. Verfahren nach einem der Ansprüche 1 bis 18, **gekennzeichnet durch** die Verwendung von Prismen (56,131,283,284,285), die an der Unterseite mit einem beidseitig klebrigen Klebeband (Doppelklebeband) versehen sind, wobei das Klebeband mit einer Seite auf der Unterseite der Prismen (56,131,283,284,285) angebracht wird und an der anderen Seite mit einer Abdeckung versehen ist, die vor dem Verkleben der Prismen (56,131,283,284,285) entfernt wird.

19. Verfahren nach einem der Ansprüche 9 bis 17, **gekennzeichnet durch** Halterungen für die Prismen(56,131,283,284,285), die an der Unterseite mit einem beidseitig klebrigen Klebeband(Doppelklebeband) versehen sind, wobei das Klebeband mit einer Seite auf der Unterseite der Halterung angebracht wird und an der anderen Seite mit einer Abdeckung versehen ist, die vor dem Verkleben der Prismen (56,131,283,284,285) entfernt wird.

20. Verfahren nach Anspruch 18 oder 19, **gekennzeichnet durch** die Verwendung von Klebebandabschnitten oder auswechselbarem Klebeband oder Klebeband mit einer Abzuglasche.

21. Verfahren nach einem der Ansprüche 1 bis 17, **dadurch gekennzeichnet, daß** mindestens ein Fahrzeugs das mindestens eine Tachymeter (60,122,280,281,282) bei der Vermessung trägt.

22. Verfahren nach Anspruch 21, **gekennzeichnet durch** eine Versteifung und/oder Abstützung des mindestens einen Fahrzeuges mittels Stützen bei der Messung.

23. Verfahren nach Anspruch 22, **gekennzeichnet durch** eine Arretierung der Stützen während der Messung.

24. Verfahren nach einem der Ansprüche 17 bis 23, **dadurch gekennzeichnet, daß** ein auf einem Fahrzeug befindliches Tachymeter an einer Messstellung auf dort angeordnete Prismen. ausgerichtet wird.

25. Verfahren nach Anspruch 24, **gekennzeichnet durch** die Verwendung eines in allen Richtungen schwenkbaren Tachymeters (60,122,280,281,282) mit Zielsuche und Zielerkennung.

26. Verfahren nach einem der Ansprüche 1 bis 25, **gekennzeichnet durch** eine mehrfache parallele Vermessung während eines Vermessungsschrittes.

27. Verfahren nach Anspruch 26, **dadurch gekennzeichnet, daß** mehrere Prismen (56,131,283,284,285) in Umfangsrichtung des Bauwerkes nebeneinander angeordnet sind.

28. Verfahren nach Anspruch 26 oder 27, **dadurch gekennzeichnet, daß** mehrere Prismen (56,131,283,284,285) in Längsrichtung des Bauwerkes hintereinander im Bauwerk angeordnet sind.

29. Verfahren nach einem der Ansprüche 26 bis 28, **gekennzeichnet durch** die Verwendung eines verfahrbaren Tachymeters(60,122,280,281,282), das in auf dem Fahrzeug verstellbar ist.

30. Verfahren nach einem der Ansprüche 26 bis 29, **dadurch gekennzeichnet, dass** das Fahrzeug mit einer in alle Richtungen bewegbaren Positionierungsmechanik versehen ist, wobei die Positionierungsmechanik das Tachymeter (60,122,280,281,282) trägt.

31. Verfahren nach Anspruch 30, **dadurch gekennzeichnet, daß** die Positionierungsmechanik heb- und senkbar ist.

32. Verfahren nach Anspruch 31, **dadurch gekennzeichnet, daß** mindestens eine Stange als Führung für die heb- und senkbare Positionierungsmechanik ausgebildet ist.

33. Verfahren nach Anspruch 32, **gekennzeichnet durch** eine gleichzeitige Nutzung der Stange als Fahrzeugabstützung.

34. Verfahren nach einem der Ansprüche 30 bis 33, **dadurch gekennzeichnet, daß** die Positionierungsmechanik schwenkbar ist.

35. Verfahren nach einem der Ansprüche 30 bis 34, **dadurch gekennzeichnet, daß** die Positionierungsmechanik aus ineinanderschiebbaren und auseinanderziehbaren Profilen besteht.

36. Verfahren nach Anspruch 35, **dadurch gekennzeichnet, daß** die Positionierungsmechanik in der jeweiligen Messstellung arretierbar ist.

37. Verfahren nach Anspruch 30 bis 36, **dadurch gekennzeichnet, dass** die Positionierungsmechanik mehr als eine Messstellung aufweist.

38. Verfahren nach Anspruch 36 oder 37, **dadurch gekennzeichnet,daß** die Positionierungsmechanik zur Arretierung in der jeweiligen Messstellung mit einer Klemmvorrichtung und/oder einer Raste versehen ist.

39. Verfahren nach einem der Ansprüche 30 bis 38, **dadurch gekennzeichnet, dass** die Positionierungsmechanik hydraulischen Antriebe aufweist, welche in einem gemeinsamen Hydraulikkreis angeordnet sind und durch eine Ventilbetätigung verriegelt werden.

40. Verfahren nach Anspruch 39, **dadurch gekennzeichnet, daß** die Positionierungsmechanik eine hydraulische Klemmung besitzt, wobei die hydraulische Klemmung während der Messung erfolgt.

41. Verfahren nach Anspruch 39 oder 40, **dadurch gekennzeichnet, daß** Fahrzeug hydraulisch betätigte Stützen besitzt.

42. Verfahren nach einem der Ansprüche 39 bis 41, **dadurch gekennzeichnet daß** ein gemeinsamer Hydraulikkreis die hydraulischen Antriebe, die hydraulische Klemmung und die hydraulischen Stützen versorgt.

43. Verfahren nach einem der Ansprüche 30 bis 42, **dadurch gekennzeichnet, dass** die Messgeräte zur Herstellung paralleler Messstrecken auf unterschiedliche Messstellen der Positionierungsmechanik aufgesetzt werden.

44. Verfahren nach einem der Ansprüche 25 bis 43, **dadurch gekennzeichnet, dass** mehr als ein Tachymeter und/oder Prisma auf jeder Positionierungsmechanik aufgestellt wird.

45. Verfahren nach Anspruch 44, **dadurch gekennzeichnet, dass** die Tachymeter und Prismen übereinander angeordnet werden.

46. Verfahren nach Anspruch 44 oder 45, **dadurch gekennzeichnet, daß** zwei Prismen (56,131,283,284,285) übereinander angeordnet sind.

47. Verfahren nach Anspruch 44 oder 45, **gekennzeichnet durch** hintereinander oder nebeneinander angeordnete Tachymeter und/oder Prismen

48. Verfahren nach einem der Ansprüche 44 bis 47, **dadurch gekennzeichnet daß** die Prismen Doppelprismen sind.

49. Verfahren nach einem der Ansprüche 1 bis 48, **gekennzeichnet durch** die Verwendung von mindestens einem Fahrzeug mit Tachymeter (60,122,280,281,282), vorzugsweise von mindestens zwei Fahrzeugen mit Tachymeter (60,122,280,281,282) und noch weiter bevorzugt von mindestens drei Fahrzeugen mit Tachymeter (60,122,280,281,282).

50. Verfahren nach einem der Ansprüche 44 bis 49, **gekennzeichnet durch** die Verwendung von Tachymetern (60,122,280,281,282) und darüber angeordneten Prismen (56,131,283,284,285).

51. Verfahren nach Anspruch 1 bis 50, **gekennzeichnet durch** die Verwendung eines Fahrzeuges, welches zumindest vorn und hinten ein Tachymeter oder Prisma trägt.

52. Verfahren nach einem der Ansprüche 1 bis 51, **dadurch gekennzeichnet, dass** das Bauwerk beider Nachvermessung auf der ganzen Länge neu vermessen wird.

53. Verfahren nach einem der Ansprüche 1 bis 52, **gekennzeichnet durch** eine Vermessung des Bauwerkes beim Vortrieb und eine anschliessende Vermessung des Bauwerkes in umgekehrter Richtung und **durch** einen Vergleich der Messwerte beider vermessungen.

54. Verfahren nach einem der Ansprüche 1 bis 53, **dadurch gekennzeichnet, daß** das mindestens eine Fahrzeug mit elektrischem, batteriegetriebenem Antrieb zum Personen- und/oder Materialtransport von Messstelle zu Messstelle eingerichtet ist.

55. Verfahren nach einem der Ansprüche 1 bis 54, **dadurch gekennzeichnet daß** das Fahrzeug lenkfähig oder mindestens eine gleisgebunden ist.

56. Verfahren nach einem der Ansprüche 1 bis 55, **dadurch gekennzeichnet, daß** das mindestens Fahrzeug dreirädrig oder vierrädrig mit einer ferngesteuerten Lenkung ist.

57. Verfahren nach Anspruch 56, **dadurch gekennzeichnet, daß** das mindestens eine Fahrzeug eine ferngesteuerte Lenkung besitzt, die im Störungsfall auf Handbetätigung umgeschaltet wird.

58. Verfahren nach einem der Ansprüche 1 bis 57, **dadurch gekennzeichnet, daß** weitere mobile Tachymeter (60,122,280,281,282) unter die im Bauwerk montierten Prismen (56,131,283,284,285) verfahren werden, wobei die Prismen (56,131,283,284,285) nach innen gegen die Tachymeter (60,122,280,281,282) gerichtet sind, daß anschließend die Position dieser Tachymeter (60,122,280,281,282) im Bauwerk vermessen wird, um davon die Position der Prismen (56,131,283,284,285) durch Vermessung der Prismen (56,131,283,284,285) abzuleiten, wobei die Tachymetermessstrahlen gegen die Prismen (56,131,283,284,285) gerichtet werden, wobei der Tachymeterabstand von den Prismen (56,131,283,284,285) im Bauwerk größer/gleich der zulässigen Tachymeter-Mindestentfernung vom Messziel ist.

59. Verfahren nach Anspruch 58, **dadurch gekennzeichnet, daß** die Tachymeter (60,122,280,281,282) einander gegenseitig zur Bestimmung ihrer Position im Bauwerk vermessen.

60. Verfahren nach einem der Ansprüche 1 bis 58, **dadurch gekennzeichnet, daß** die mobilen Tachymeter (60,122,280,281,282) auf vorbestimmte Positionen zwischen die in Längsrichtung des Bauwerkes im Bauwerk montierten Prismen (56,131,283,284,285) verfahren werden, wobei die Prismen (56,131,283,284,285) auf die vorbestimmten Positionen gerichtet sind, anschließend die Position dieser Tachymeter (60,122,280,281,282) im Bauwerk vermessen wird, um davon die Position der Prismen (56,131,283,284,285) durch Vermessung der Prismen (56,131,283,284,285) abzuleiten, wobei die Tachymetermessstrahlen gegen die Prismen (56,131,283,284,285) gerichtet werden, wobei der Tachymeterabstand von den Prismen (56,131,283,284,285) im Bauwerk größer/gleich der zulässigen Tachymeter-Mindestentfernung vom Messziel ist.

61. Verfahren nach Anspruch 60, **gekennzeichnet durch** mindestens eine Verstellung der Tachymeter (60,122,280,281,282) in dem Zwischenraum zwischen zwei benachbarten Prismen (56,131,283,284,285) und erneute Vermessung der Tachymeterposition und der Prismen (56,131,283,284,285) in dem veränderten Abstand zwischen Tachymeter (60,122,280,281,282) und Prismen (56,131,283,284,285).

62. Verfahren nach Anspruch 61, **dadurch gekennzeichnet, daß** die Tachymeter (60,122,280,281,282) soweit an die Höhe der Prismen (56,131,283,284,285) herangebracht werden, daß die Reflektion des Tachymetermessstrahles aus den Prismen (56,131,283,284,285) im ausreichenden Umfang von dem Tachymeter (60,122,280,281,282) aufgenommen werden kann, so daß eine Änderung der Prismenausrichtung bei einer Abstandsänderung entbehrlich ist.

63. Verfahren nach Anspruch 61, **dadurch gekennzeichnet, daß** Prismen (56,131,283,284,285) mit einer automatischen Zielsuche verwendet werden, so daß bei einer Abstandsänderung zwischen Tachymeter (60,122,280,281,282) und Prismen (56,131,283,284,285) und wesentlichem Höhenunterschied der Tachymeter (60,122,280,281,282) zu den Prismen (56,131,283,284,285) eine automatische Neuausrichtung der Prismen (56,131,283,284,285) während eines Vermessungsschrittes erfolgt.

64. Verfahren nach einem der Ansprüche 1 bis 63, **gekennzeichnet durch** Verwendung einer programmierbaren Steuerung des Fahrzeuges und **durch** Einprogrammieren der in der Planung vorgesehenen Fahrzeugstellungen beim Messen und eine Verknüpfung der Fahrzeugsteuerung mit dem Tachymetermessprogramm.

65. Verfahren nach einem der Ansprüche 1 bis 64, **dadurch gekennzeichnet, daß** das mindestens eine Fahrzeugen mit Ösen am Fahrzeugrahmen zum Anschlagen von Hubgeschirren.

## Claims

1. Method for re-surveying underground construction sites such as tunnels, sewers, mine galleries, subways,
wherein optionally pipe jacking or tubbing is taking place,
wherein the construction occurs at a fixed location or is moved with the pipe jack through the subsurface,
wherein a plurality of prisms (56, 131, 283, 284, 285) are provided in the underground construction sites and
wherein the prisms (56, 131, 283, 284, 285) are arranged in groups in prism wreaths (62, 63, 66) in the construction site rooves and
wherein the prisms (56, 131, 283, 284, 285) of the prism wreaths (62, 63, 66) are surveyed with at least one tacheometer (60, 122, 280, 281, 282),
wherein a stepwise survey of the construction site takes place with the prisms (56, 131, 283, 284, 285) and the tacheometer (60,122,280,281,282),
wherein in each survey step the prisms (56, 131, 283, 284, 285) of three prism wreaths (62, 63, 66) are surveyed, of which two prism wreaths (62, 63, 66) had already been surveyed in a preceding survey step, such that each new survey step overlaps with a preceding survey step;
thetacheometer (60,122,280,281,282) measures in various directions,
after a measurement the tacheometer (60,122,280,281,282) is transported from the associated measurement location into the next measurement location and
the measurements are carried out with a stationary tacheometer (60, 122, 280, 281, 282),
wherein the path from one measurement location to the next measurement location determines the survey step.

2. Method according to claim 1, **characterised in that** the total measurement segment is surveyed unmanned.

3. Method according to claim 1 or 2, **characterised in that**
measurementsegments toward a target are produced stepwise which extend over two or more mounted prisms (56, 131, 283, 284, 285) and
wherein the various measurement steps overlap one another and
wherein the individual overlapping measurement segments complement each other to form a complete measurement segment.

4. Method according to claim 3, **characterised by** the use of groups of prisms (56, 131, 283, 284, 285) for the survey on parallel measurement segments, i.e. measurement segments that run to and fro and/or intersect one another in the construction site.

5. Method according to one of claims 1 to 4, **characterised by** mounting the prisms (56, 131, 283, 284, 285) in the construction site in the area of pre-defined measurement points.

6. Method according to claim 5, **characterised by** mounting the prisms (56, 131, 283, 284, 285) by means of adhesion.

7. Method according to claim 5, **characterised by** mounting the prisms (56, 131, 283, 284, 285) by means of magnets.

8. Method according to claim 7, **characterised by** the use of a support that is magnetically attachable.

9. Method according to claim 8, **characterised by** the use of steel sheets as the support.

10. Method according to claim 8 or 9, **characterised by** adhesively bonding the support to the construction site.

11. Method according to claim 10, **characterised by** an at least temporary adhesion of the support.

12. Method according to one of claims 9 to 11, **characterised by** the use of steel sheetswith a thickness of less than/equal to 0.5 mm, preferably less than/equal to 0.4 mm and still more preferably less than/equal to 0.3 mm.

13. Method according to one of claims 9 to 12, **characterised by** the use of steel sheets with a width of less than/equal to 0.3m, preferably less than/equal to 0.2m and most preferably less than/equal to 0.1 m.

14. Method according to one of claims 10 to 14, **characterised by** the use of steel sheets with a length of less than/equal to 0.5m, preferably less than/equal to 0.4m and most preferably of 0.3m.

15. Method according to one of claims 9 to 14, **characterised by** laying the steel sheet with the longitudinal direction in the circumferential direction of the construction site.

16. Method according to claim 1 to 15, **characterised by** the use of a plurality of prisms (56, 131, 283, 284, 285) in at least one prism wreath at a survey point.

17. Method according to claim 16, **characterised by** the use of a plurality of groups of prism wreaths (56, 131, 283, 284, 285).

18. Method according to one of claims 1 to 18, **characterised by** the use of prisms (56, 131, 283, 284, 285) that are furnished on the lower side with an adhesive tape that is adhesive on both sides (double-sided adhesive tape), wherein the adhesive tape is attached with one side on the lower surface of the prisms (56, 131, 283, 284, 285) and the other side is provided with a backing material that is removed prior to adhesively bonding the prisms (56, 131, 283, 284, 285).

19. Method according to one of claims 9 to 17, **characterised by** supports for the prisms (56, 131, 283, 284, 285), said supports being furnished on the lower side with an adhesive tape that is adhesive on both sides (double-sided adhesive tape), wherein the adhesive tape is attached with one side to the lower surface of the support and the other side is provided with a backing material that is removed prior to adhesively bonding the prisms (56, 131, 283, 284, 285).

20. Method according to claim 18 or 19, **characterised by** the use of strips of adhesive tape or wherein the adhesive tape is replaceable or wherein the adhesive tape is provided with a pull-tab.

21. Method according to one of claims 1 to 17, **characterised in that** at least one vehicle carries at least one tacheometer (60, 122, 280, 281, 282) for the survey.

22. Method according to claim 21, **characterised by** a strengthening and/or support of the at least one vehicle for the measurement by means of supports.

23. Method according to claim 22, **characterised by** a locking of the supports during the measurement.

24. Method according to one of claims 17 to 23, **characterised in that** a tacheometer on a vehicle at a measurement point is aligned to prisms that are located there.

25. Method according to claim 24, **characterised in that** thetacheometerwith target search and target recognition capabilities is omnidirectionallypivotable.

26. Method according to one of claims 1 to 25, **characterised by** a repeated parallel survey during a survey step.

27. Method according to claim 26, **characterised in that** a plurality of prisms (56, 131, 283, 284, 285) are arranged beside one another in the circumferential direction of the construction site.

28. Method according to claim 26 or 27, **characterised in that** a plurality of prisms (56, 131, 283, 284, 285) are arranged one after the other in the construction site in the longitudinal direction of the construction site.

29. Method according to one of claims 26 to 28, **characterised in that** the tacheometeris mobile and can be adjusted on the vehicle.

30. Method according to one of claims 26 to 29, **characterised in that** the vehicle is equipped with an omnidirectionally moveable positioning mechanism, wherein the positioning mechanism carries the tacheometer (60,122,280,281,282).

31. Method according to claim 30, **characterised in that** the positioning mechanism can be raised and lowered.

32. Method according to claim 31, **characterised in that** at least one rod is designed as the guideway for the raisable and lowerable positioning mechanism.

33. Method according to claim 32, **characterised by** a simultaneous utilisation of the rod as the vehicle support.

34. Method according to one of claims 30 to 33, **characterised in that** the positioning mechanism is pivotable.

35. Method according to one of claims 30 to 34, **characterised in that** the positioning mechanism consists of telescopic profiles.

36. Method according to claim 35, **characterised in that** the positioning mechanism is lockable in the relevant measurement position.

37. Method according to claim 30 to 36, **characterised in that** the positioning mechanism has more than one measurement position.

38. Method according to claim 36 or 37, **characterised in that** said mechanism is equipped with a clamping device and/or a notch for locking the positioning mechanism in the relevant measurement position.

39. Method according to one of claims 31 to 39, **characterised in that** the positioning mechanism has hydraulic drives that are arranged in a common hydraulic circuit and are secured by actuating a valve.

40. Method according to claim 39, **characterised in that** the positioning mechanism possesses a hydraulic clamp, wherein the hydraulic clamping occurs during the measurement.

41. Method according to claim 39 or 40, **characterised in that** the vehicle possesses hydraulically actuated supports.

42. Method according to one of claims 39 to 41, **characterised in that** a common hydraulic circuit supplies the hydraulic drives, the hydraulic clamp and the hydraulic supports.

43. Method according to one of claims 30 to 42, **characterised in that** measuring instruments for producing the parallel measurement paths are mounted on different measuring points of the positioning mechanism.

44. Method according to one of claims 25 to 43, **characterised in that** more than one tacheometer and/or prism is mounted on each positioning mechanism.

45. Method according to claim 44, **characterised in that** the tacheometer and prism are arranged one on top of the other.

46. Method according to claim 44 or 45, **characterised in that** two prisms (56, 131, 283, 284, 285) are arranged one on top of the other.

47. Method according to claim 44 or 45, **characterised by** tacheometers and/or prisms that are arranged one after the other or beside one another.

48. Method according to one of claims 44 to 47, **characterised in that** the prisms are double prisms.

49. Method according to one of claims 1 to 48, **characterised by** the use of at least one vehicle with tacheometers (60, 122, 280, 281, 282), preferably at least two vehicles with tacheometers (60, 122, 280, 281, 282) and still more preferably at least three vehicles with tacheometers (60, 122, 280, 281, 282).

50. Method according to one of claims 45 to 50, **characterised by** the use of tacheometers (60, 122, 280, 281, 282) and prisms (56, 131, 283, 284, 285) that are arranged above them.

51. Method according to claim 1 to 50, **characterised by** the use of a vehicle that carries a measurement tool at least at the front and at the back.

52. Method according to one of claims 1 to 51, **characterised in that** the construction site when re-surveyed is surveyed again over the total length.

53. Method according to one of claims 1 to 52, **characterised by** a survey of the construction site when pipe-jacking and a subsequent survey of the construction site in the opposite direction, and a comparison of the measured values/both surveys.

54. Method according to one of claims 1 to 53, **characterised in that** the at least one vehicle for the transport of people and/or material from measuring point to measuring pointis equipped with an electric, battery-driven drive.

55. Method according to one of claims 1 to 54, **characterised in that** the at least one vehicle is steerable or track-bound.

56. Method according to one of claims 1 to 55, **characterised in that** the at least one vehicle is three-wheeled or four-wheeled with a remote controlled steering.

57. Method according to claim 56, **characterised in that** the at least one vehicle possesses a remote controlled steering that in a breakdownis switched over to manual operation.

58. Method according to one of claims 1 to 57, **characterised in that** a plurality of mobile tacheometers (60, 122, 280, 281, 282) are drivenunder the prisms (56, 131, 283, 284, 285) mounted in the construction site, wherein the prisms (56, 131, 283, 284, 285) are orientated inwards toward the tacheometers (60, 122, 280, 281, 282), that the position of these tacheometers (60, 122, 280, 281, 282) in the construction site is subsequently surveyed, in order to derive therefrom the position of the prisms (56, 131, 283, 284, 285) by surveying the prisms (56, 131, 283, 284, 285), wherein the tacheometer measurement beams are aligned toward the prisms (56, 131, 283, 284, 285), wherein the distance of the tacheometer from the prisms (56, 131, 283, 284, 285) in the construction site is greater than/equal to the admissible minimum distance of the tacheometer from the measured target.

59. Method according to claim 58, **characterised in that** the tacheometers (60, 122, 280, 281, 282) survey each other so as to determine their position in the construction site.

60. Method according to one of claims 1 to 58, **characterised in that** the mobile tacheometers(60, 122, 280, 281, 282) are driven to pre-defined positions in the construction site between the prisms (56, 131, 283, 284, 285) mounted in the longitudinal direction of the construction site, wherein the prisms (56, 131, 283, 284, 285) are orientated toward the pre-defined positions, then the position of these tacheometers(60, 122, 280, 281, 282) in the construction site is surveyed in order to derive therefrom the position of the prisms (56, 131, 283, 284, 285) by surveying the prisms (56, 131, 283, 284, 285), wherein the tacheometer measurement beams are aligned toward the prisms (56, 131, 283, 284, 285), wherein the distance of the tacheometer from the prisms in the construction site is greater than/equal to the admissible minimum distance of the tacheometer from the measured target.

61. Method according to claim 60, **characterised by** at least one displacement of the tacheometers(60, 122, 280, 281, 282) in the intermediate space between two neighbouring prisms (56, 131, 283, 284, 285) and resurveying the position of the tacheometer and prisms (56, 131, 283, 284, 285) in the modifieddistance between tacheometer and prisms (56, 131, 283, 284, 285).

62. Method according to claim 61, **characterised in that** the tacheometers (60, 122, 280, 281, 282) are brought so far up to the level of the prisms(56, 131, 283, 284, 285), that the reflection of the tacheometer measurement beam from the prisms (56, 131, 283, 284, 285)can be captured to a sufficient extent by the tacheometer(60, 122, 280, 281, 282), such that a change of the orientation of the prisms is unnecessarywhen the distance is modified.

63. Method according to claim 61, **characterised in that** prisms (56,131,283,284,285) with an automatic target search are used, such that for a change in distance between tacheometer(60, 122, 280, 281, 282) and prisms (56,131,283,284,285) and with a significant difference in height of the tacheometer (60, 122, 280, 281, 282) to the prisms (56,131,283,284,285), there occurs an automatic reorientation of the prisms (56,131,283,284,285) during a survey step.

64. Method according to one of claims 1 to 63, **characterised by** the use of a programmable control of the vehicle and by programming in the vehicle locations that were pre-defined in the planning when measuring, and linking the vehicle control with the tacheometer measurement program.

65. Method according to one of claims 1 to 64, **characterised in that** the at least one vehicle has lugs on the vehicle frame for the attachment of lifting slings.

## Revendications

1. Procédé pour refaire le mesurage de constructions souterraines comme des tunnels, canaux, galeries de mines, passages souterrains, avec au choix un fonçage ou un cuvelage, l'aménagement se produisant de manière fixe sur place ou étant mobile avec l'avancement à travers le sous-sol, plusieurs prismes (56, 131, 283, 284, 285) étant prévus dans les constructions souterraines, et les prismes (56, 131, 283, 284, 285) étant disposés dans plusieurs couronnes de prismes (62, 63, 66) dans le faîte de la construction et les prismes (56, 131, 283, 284, 285) des couronnes de prismes (62, 63, 66) étant mesurés avec au moins un tachymètre (60, 122, 280, 281, 282), un mesurage par étape de la construction ayant lieu avec les prismes (56, 131, 283, 284, 285) et le tachymètre (60, 122, 280, 281, 282) à chaque étape de mesurage, les prismes (56, 131, 283, 284, 285) de trois couronnes de prismes (62, 63, 66) étant mesurés dont deux couronnes de prismes (62, 63, 66) ayant déjà été mesurées dans une précédente étape de mesurage, de sorte que chaque nouvelle étape de mesurage se chevauche avec une précédente étape de mesurage ;
- le tachymètre (60, 122, 280, 281, 282) mesure dans différentes directions,
- le tachymètre (60, 122, 280, 281, 282) est transporté, après une mesure, de la position de mesure associée à la position de mesure suivante, et les mesurages sont réalisés le tachymètre (60, 122, 280, 281, 282) étant statique, le parcours d'une position de mesure à la position de mesure suivante définissant l'étape de mesurage.

2. Procédé selon la revendication 1, **caractérisé en ce que** toute la section de mesure est mesurée sans homme.

3. Procédé selon la revendication 1 ou 2, **caractérisé en ce que** des sections de mesure qui s'étendent sur deux ou plusieurs prismes (56, 131, 283, 284, 285) placés sont créées par étape jusqu'à une cible, et les différentes étapes de mesure se chevauchant les unes les autres, et chacune des sections de mesure se chevauchant, se complétant pour devenir une section de mesure entière.

4. Procédé selon la revendication 3, **caractérisé par** l'utilisation de groupes de prismes (56, 131, 283, 284, 285) pour le mesurage sur des sections de mesure parallèles, c'est-à-dire, des sections de mesure, qui vont et viennent ou se croisent dans la construction.

5. Procédé selon l'une des revendications 1 à 4, **caractérisé par** un placement des prismes (56, 131, 283, 284, 285) dans la construction dans la zone d'endroits de mesure prédéfinis.

6. Procédé selon la revendication 5, **caractérisé par** un placement des prismes (56, 131, 283, 284, 285) par collage.

7. Procédé selon la revendication 5, **caractérisé par** une fixation amovible des prismes (56, 131, 283, 284, 285) au moyen d'aimants.

8. Procédé selon la revendication 7, **caractérisé par** l'utilisation d'un support attiré par des aimants.

9. Procédé selon la revendication 8, **caractérisé par** l'utilisation de tôles en acier en tant que support.

10. Procédé selon la revendication 8 ou 9, **caractérisé par** un collage du support sur la construction.

11. Procédé selon la revendication 10, **caractérisé par** un collage, restant au moins temporairement, du support.

12. Procédé selon l'une des revendications 9 à 11, **caractérisé par** l'utilisation de tôles en acier d'une épaisseur inférieure ou égale à 0,5 mm, de préférence inférieure ou égale à 0,4 mm et de préférence encore inférieure ou égale à 0,3 mm.

13. Procédé selon l'une des revendications 9 à 12, **caractérisé par** l'utilisation de tôles en acier d'une largeur inférieure ou égale à 0,3 m, de préférence inférieure ou égale à 0,2 m et de manière préférée entre toutes, inférieure ou égale à 0,1 m.

14. Procédé selon l'une des revendications 10 à 13, **caractérisé par** l'utilisation de tôles en acier d'une longueur inférieure ou égale à 0,5 m, de préférence inférieure ou égale à 0,4 m et de manière préférée entre toutes, de 0,3 m.

15. Procédé selon l'une des revendications 9 à 14, **caractérisé par** la pose des tôles en acier avec le sens longitudinal dans le sens circonférentiel de la construction.

16. Procédé selon l'une des revendications 1 à 15, **caractérisé par** l'utilisation de plusieurs prismes (56, 131, 283, 284, 285) dans au moins une couronne de prismes au niveau d'un endroit de mesure.

17. Procédé selon la revendication 16, **caractérisé par** l'utilisation de plusieurs couronnes de prismes (56, 131, 283, 284, 285).

18. Procédé selon l'une des revendications 1 à 17, **caractérisé par** l'utilisation de prismes (56, 131, 283, 284, 285) qui sont munis au niveau du dessous d'une bande adhésive collante des deux côtés (bande adhésive double face), la bande adhésive étant appliquée avec un côté sur le dessous des prismes (56, 131, 283, 284, 285), et munie de l'autre côté d'un revêtement qui est retiré avant le collage des prismes (56, 131, 283, 284, 285).

19. Procédé selon l'une des revendications 9 à 17, **caractérisé par** des supports pour les prismes (56, 131, 283, 284, 285) qui sont munis au niveau du dessous d'une bande adhésive collante des deux côtés (bande adhésive double face), la bande adhésive étant appliquée avec un côté sur le dessous du support, et munie de l'autre côté d'un revêtement qui est retiré avant le collage des prismes (56, 131, 283, 284, 285).

20. Procédé selon la revendication 18 ou 19, **caractérisé par** l'utilisation de sections de bande adhésive ou de bande adhésive interchangeable ou de bande adhésive avec une languette de décollement.

21. Procédé selon l'une des revendications 1 à 17, **caractérisé en ce qu'**au moins un véhicule porte au moins un tachymètre (60, 122, 280, 281, 282) lors du mesurage.

22. Procédé selon la revendication 21, **caractérisé par** un renforcement et/ou support d'au moins un véhicule au moyen d'appuis lors du mesurage.

23. Procédé selon la revendication 22, caractérisé de par un blocage des appuis lors du mesurage.

24. Procédé selon l'une des revendications 17 à 23, **caractérisé par** l'utilisation de véhicules avec un tachymètre qui est orienté, au niveau d'une position de mesure, sur des prismes disposés là.

25. Procédé selon la revendication 24, **caractérisé par** l'utilisation d'un tachymètre (60, 122, 280, 281, 282) orientable dans toutes les directions, avec recherche de cible et reconnaissance de cible.

26. Procédé selon l'une des revendications 1 à 25, **caractérisé par** un mesurage parallèle multiple pendant une étape de mesurage.

27. Procédé selon la revendication 26, **caractérisé en ce que** plusieurs prismes (56, 131, 283, 284, 285) sont disposés les uns à côté des autres dans le sens circonférentiel de la construction.

28. Procédé selon la revendication 26 ou 27, **caractérisé en ce que** plusieurs prismes (56, 131, 283, 284, 285) sont disposés dans le sens longitudinal de la construction les uns derrières les autres dans la construction.

29. Procédé selon l'une des revendications 26 à 28, **caractérisé par** l'utilisation d'un tachymètre (60, 122, 280, 281, 282) déplaçable qui peut être réglé sur le véhicule.

30. Procédé selon l'une des revendications 26 à 29, **caractérisé en ce que** le véhicule est muni d'une mécanique de positionnement mobile dans toutes les directions, la mécanique de positionnement portant le tachymètre (60, 122, 280, 281, 282).

31. Procédé selon la revendication 30, **caractérisé en ce que** la mécanique de positionnement est soulevable et abaissable.

32. Procédé selon la revendication 31, **caractérisé en ce qu'**au moins une barre est réalisée en tant que guidage pour la mécanique de positionnement soulevable et abaissable.

33. Procédé selon la revendication 32, **caractérisé par** une utilisation, dans le même temps, de la barre en tant qu'appui du véhicule.

34. Procédé selon l'une des revendications 30 à 33, **caractérisé en ce que** la mécanique de positionnement peut pivoter.

35. Procédé selon l'une des revendications 30 à 34, **caractérisé en ce que** la mécanique de positionnement est composée de profilés pouvant se déployer et s'insérer les uns dans les autres.

36. Procédé selon la revendication 35, **caractérisé en ce que** la mécanique de positionnement peut être arrêtée dans la position de mesure respective.

37. Procédé selon l'une des revendications 30 à 36, **caractérisé en ce que** la mécanique de positionnement présente plus d'une position de mesure.

38. Procédé selon la revendication 36 ou 37, **caractérisé en ce que** la mécanique de positionnement est munie d'un dispositif de serrage et/ou d'un enclenchement pour arrêter dans la position de mesure respective.

39. Procédé selon l'une des revendications 30 à 38, **caractérisé en ce que** la mécanique de positionnement présente des entraînements hydrauliques, lesquels sont disposés dans un circuit hydraulique commun et sont verrouillés par un actionnement de soupape.

40. Procédé selon la revendication 39, **caractérisé en ce que** la mécanique de positionnement possède un serrage hydraulique, le serrage hydraulique s'effectuant pendant le mesurage.

41. Procédé selon la revendication 39 ou 40, **caractérisé en ce que** le véhicule possède des appuis actionnés hydrauliquement.

42. Procédé selon l'une des revendications 39 à 41, **caractérisé en ce qu'**un circuit hydraulique commun alimente les entraînements hydrauliques, le serrage hydraulique et les appuis hydrauliques.

43. Procédé selon l'une des revendications 30 à 42, **caractérisé en ce que** les appareils de mesure pour créer des sections de mesure parallèles sont posés sur différents endroits de mesure de la mécanique de positionnement.

44. Procédé selon l'une des revendications 25 à 43, **caractérisé en ce que** plus d'un tachymètre et/ou prisme est/sont placé(s) sur chaque mécanique de positionnement.

45. Procédé selon la revendication 44, **caractérisé en ce que** les tachymètres et prismes sont disposés superposés.

46. Procédé selon la revendication 44 ou 45, **caractérisé en ce que** deux prismes (56, 131, 283, 284, 285) sont disposés superposés.

47. Procédé selon la revendication 44 ou 45, **caractérisé par** des tachymètres et/ou prismes disposés les uns derrières les autres ou les uns à côté des autres.

48. Procédé selon l'une des revendications 44 à 47, **caractérisé en ce que** les prismes sont des doubles prismes.

49. Procédé selon l'une des revendications 1 à 48, **caractérisé par** l'utilisation d'au moins un véhicule avec tachymètres (60, 122, 280, 281, 282), de préférence d'au moins deux véhicules avec tachymètres (60, 122, 280, 281, 282), et de préférence encore, d'au moins trois véhicules avec tachymètres (60, 122, 280, 281, 282).

50. Procédé selon l'une des revendications 44 à 49, **caractérisé par** l'utilisation de tachymètres (60, 122, 280, 281, 282) et de prismes (56, 131, 283, 284, 285) disposés au-dessus.

51. Procédé selon l'une des revendications 1 à 50, **caractérisé par** l'utilisation d'un véhicule, lequel porte au moins devant et derrière un tachymètre ou un prisme.

52. Procédé selon l'une des revendications 1 à 51, **caractérisé en ce que** lors du remesurage, la construction est à nouveau mesurée sur toute la longueur.

53. Procédé selon l'une des revendications 1 à 52, **caractérisé par** un mesurage de la construction lors de l'avancement et un mesurage ultérieur de la construction en direction inverse et par une comparaison des valeurs de mesure des deux mesurages.

54. Procédé selon l'une des revendications 1 à 53, **caractérisé en ce qu'**au moins un véhicule avec entraînement électrique, actionné par batterie, est mis en place pour le transport de matériel et/ou personne d'endroit de mesure à endroit de mesure.

55. Procédé selon l'une des revendications 1 à 54, **caractérisé en ce qu'**au moins un véhicule pouvant être manoeuvré est sur rail.

56. Procédé selon l'une des revendications 1 à 55, **caractérisé en ce qu'**au moins un véhicule à trois roues ou à quatre roues est avec un pilotage commandé à distance.

57. Procédé selon la revendication 56, **caractérisé en ce qu'**au moins un véhicule possède un pilotage commandé à distance, qui est, en cas de dysfonctionnement, commuté sur une commande manuelle.

58. Procédé selon l'une des revendications 1 à 57, **caractérisé en ce que** plusieurs tachymètres (60, 122, 280, 281, 282) mobiles sont déplacés sous les prismes (56, 131, 283, 284, 285) montés dans la construction, les prismes (56, 131, 283, 284, 285) étant orientés vers l'intérieur de façon opposée aux tachymètres (60, 122, 280, 281, 282), **en ce qu'**ensuite, la position de ces tachymètres (60, 122, 280, 281, 282) est mesurée dans la construction afin de déduire la position des prismes (56, 131, 283, 284, 285) par mesurage des prismes (56, 131, 283, 284, 285), les rayons de mesure des tachymètres étant orientés de façon opposée aux prismes (56, 131, 283, 284, 285), l'espacement entre les tachymètres et les prismes (56, 131, 283, 284, 285) étant dans la construction supérieur ou égal à l'éloignement minimum autorisé des tachymètres de la cible de mesure.

59. Procédé selon la revendication 58, **caractérisé en ce que** les tachymètres (60, 122, 280, 281, 282) se mesurent mutuellement pour déterminer leur position dans la construction.

60. Procédé selon l'une des revendications 1 à 58, **caractérisé en ce que** les tachymètres (60, 122, 280, 281, 282) mobiles sont transportés sur des positions prédéfinies entre les prismes (56, 131, 283, 284, 285) montés dans la construction dans le sens longitudinal de la construction, les prismes (56, 131, 283, 284, 285) étant orientés sur des positions prédéfinies, puis la position de ces tachymètres (60, 122, 280, 281, 282) est mesurée dans la construction, afin de déduire la position des prismes (56, 131, 283, 284, 285) par mesurage des prismes (56, 131, 283, 284, 285), les rayons de mesure des tachymètres étant orientés de façon opposée aux prismes (56, 131, 283, 284, 285), l'espacement entre les tachymètres et les prismes (56, 131, 283, 284, 285) étant dans la construction supérieur ou égal à l'éloignement minimum autorisé des tachymètres de la cible de mesure.

61. Procédé selon la revendication 60, **caractérisé par** au moins un déplacement des tachymètres (60, 122, 280, 281, 282) dans l'espace intermédiaire entre deux prismes (56, 131, 283, 284, 285) contigus et une nouvelle mesure de la position des tachymètres et prismes (56, 131, 283, 284, 285) dans l'espacement modifié entre les tachymètres (60, 122, 280, 281, 282) et prismes (56, 131, 283, 284, 285).

62. Procédé selon la revendication 61, **caractérisé en ce que** les tachymètres (60, 122, 280, 281, 282) sont positionnés aussi loin de la hauteur des prismes (56, 131, 283, 284, 285) que la réflexion du rayon de mesure du tachymètre peut être reçue des prismes (56, 131, 283, 284, 285) dans l'étendue suffisante du tachymètre (60, 122, 280, 281, 282), de sorte que modifier l'orientation des prismes est inutile lors de toute modification de l'espacement.

63. Procédé selon la revendication 61, **caractérisé en ce que** des prismes (56, 131, 283, 284, 285) sont utilisés avec une recherche de cible automatisée, de sorte qu'une nouvelle orientation automatique des prismes (56, 131, 283, 284, 285) est réalisée pendant une étape de mesurage, lors de toute modification de l'espacement entre les tachymètres (60, 122, 280, 281, 282) et les prismes (56, 131, 283, 284, 285) et essentiellement la différence de hauteur des tachymètres (60, 122, 280, 281, 282) par rapport aux prismes (56, 131, 283, 284, 285).

64. Procédé selon l'une des revendications 1 à 63, **caractérisé par** l'utilisation d'une commande programmable du véhicule et par le programmage des positions du véhicule prévues dans la conception, lors du mesurage, et un lien de la commande du véhicule avec le programme de mesure du tachymètre.

65. Procédé selon l'une des revendications 1 à 64, **caractérisé en ce qu'**au moins un véhicule est muni d'oeillets au niveau du cadre du véhicule pour positionnement en butée d'harnais de hissage.
